(19) Europäisches Patentamt
European Patent Office
Office européen des brevets

(11) **EP 4 525 076 A1**

(12) **EUROPEAN PATENT APPLICATION**
published in accordance with Art. 153(4) EPC

(43) Date of publication:
**19.03.2025 Bulletin 2025/12**

(21) Application number: 23931500.5

(22) Date of filing: **07.04.2023**

(51) International Patent Classification (IPC):
$H01M\ 4/136^{(2010.01)}$    $H01M\ 4/139^{(2010.01)}$
$H01M\ 10/0525^{(2010.01)}$    $C01B\ 25/45^{(2006.01)}$
$C01B\ 32/05^{(2017.01)}$

(52) Cooperative Patent Classification (CPC):
Y02E 60/10

(86) International application number:
**PCT/CN2023/086937**

(87) International publication number:
**WO 2024/207439 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Beijing Easpring Material Technology Co., Ltd.**
**Beijing 100160 (CN)**

(72) Inventors:
• **TIAN, Xinmin**
**Beijing 100160 (CN)**
• **LIANG, Ce**
**Beijing 100160 (CN)**
• **ZHANG, Pengli**
**Beijing 100160 (CN)**
• **LIU, Yafei**
**Beijing 100160 (CN)**
• **CHEN, Yanbin**
**Beijing 100160 (CN)**

(74) Representative: **Nederlandsch Octrooibureau**
**P.O. Box 29720**
**2502 LS The Hague (NL)**

(54) **LITHIUM MANGANESE IRON PHOSPHATE POSITIVE ELECTRODE MATERIAL AND PREPARATION METHOD THEREFOR, MANGANESE IRON PHOSPHATE PRECURSOR AND PREPARATION METHOD THEREFOR, AND LITHIUM-ION BATTERY**

(57)    The present disclosure relates to the technical field of preparation of a lithium-ion cathode material, and discloses a lithium manganese iron phosphate cathode material and a preparation method thereof, a manganese iron phosphate precursor and a preparation method thereof, and a lithium-ion battery. The cathode material has a composition represented by Formula I: $Li_dMn_{1-a-c}Fe_aR_bPO_4/C$, Formula I, where $0.1 \le a \le 0.5$, $0 \le b \le 0.08$, $0.9 < d \le 1.2$, and R is selected from at least one of Al, Mg, Ca, Sr, V, Cr, Y, Mo, Nb, B, Al, W, La, Sm, Co, Ni, Cu, Zn, Zr, and Ti. The cathode material has a volume resistivity ranging from 10 $\Omega \cdot cm$ to $10^4\ \Omega \cdot cm$. The cathode material includes specific doping elements and has a low volume resistivity. When the cathode material is used to prepare the lithium-ion battery, electrochemical performance of the lithium-ion battery can be effectively improved.

FIG. 3

## Description

### FIELD

The present disclosure relates to the technical field of preparation of a lithium-ion cathode material, and more particularly, to a lithium manganese iron phosphate cathode material and a preparation method thereof, a manganese iron phosphate precursor and a preparation method thereof, and a lithium-ion battery.

### BACKGROUND

Lithium-ion batteries, as an important power system, are widely used in 3C products such as computers, communication tools and electronic tools, electric vehicles such as EV and PREV, and energy storage systems. Lithium iron phosphate, as a cathode material for lithium-ion batteries, has characteristics of safety, high stability, and low cost, allowing it to take increasingly greater market share. However, shortcomings of lithium iron phosphate, such as poor electronic conductivity, small lithium-ion diffusion coefficient, and low energy density, limit its further development and application in the field of electric vehicles. Lithium manganese iron phosphate, as an upgraded product of lithium iron phosphate, has the same specific capacity as lithium iron phosphate (theoretical capacity of 170 mAh/g). However, due to the introduction of manganese, lithium manganese iron phosphate has a higher redox potential, thereby improving an energy density of the material.

Currently, lithium manganese iron phosphate is mainly synthesized by a high-temperature solid-phase method, a hydrothermal method, a co-precipitation method, etc. The high-temperature solid-phase method is suitable for industrial production due to the simple process flow, but manganese and iron at an atomic level can hardly be mixed evenly, resulting in a poor consistency and uneven morphology of the particle, thereby affecting a pellet density and a discharge capacity. The main advantages of the co-precipitation method are even particle composition, adjustable size structure, simple operation, and industrial production. The preparation of manganese iron phosphate precursor is the key to synthesizing high-performance materials.

Currently, manganese iron phosphate precursors have been extensively studied. CN114057177A discloses a ferromanganese phosphate and a preparation method thereof. The method includes: dissolving divalent manganese salt and divalent iron salt in water to obtain a mixed salt solution of a manganese salt and an iron salt; adding a phosphorus source to the mixed salt solution to obtain a precursor solution; adding an alkali the precursor solution for co-precipitation to obtain a ferromanganese phosphate slurry, the ferromanganese phosphate slurry including ferrous phosphate precipitate and ferromanganese phosphate precipitate; washing the ferromanganese phosphate slurry with water, and performing filtering and drying to obtain ferromanganese phosphate. The samples prepared by this method exhibited phase separation of ferrous phosphate and manganese phosphate, resulting in an uneven structure. Due to a large deviation in a ratio of metal to phosphorus, a phosphorus source is necessary to be supplemented during the preparation of the cathode material. It is not easy to control the ratio of metal to phosphorus, which limits the performance of the cathode material.

CN107697899A discloses a preparation method of manganese iron phosphate. The preparation method includes: precipitating divalent ferromanganese under alkaline conditions; adding an oxidant to oxidize the divalent ferromanganese into trivalent ferromanganese; and then adding a phosphorus source to convert the phosphate. This preparation method has a complicated process and involves too many phase transitions, during which defects may likely occur. In addition, indicators such as particle size and morphology of the precursor are difficult to control.

### SUMMARY

The technical problem to be solved by the present disclosure is to overcome the deficiencies of the prior art by providing a lithium manganese iron phosphate cathode material and a preparation method thereof, a manganese iron phosphate precursor and a preparation method thereof, and a lithium-ion battery. The lithium manganese iron phosphate cathode material includes specific doping elements, and has a high purity and a low volume resistivity. When it is used to prepare a lithium-ion battery, electrochemical performance of the lithium-ion battery can be effectively improved. Specifically, the lithium-ion battery has a high specific capacity, high cycle stability, and a high energy density.

In order to achieve the above-mentioned object, a first aspect of the present disclosure provides a lithium manganese iron phosphate cathode material. The cathode material has a composition represented by Formula I: $Li_dMn_{1-a-b-c}Fe_aR_bPO_4/C$, Formula I, where $0.1 \leq a \leq 0.5$, $0 < b < 0.08$, $0.9 < d < 1.2$, and R is selected from at least one of Al, Mg, Ca, Sr, V, Cr, Y, Mo, Nb, B, Al, W, La, Sm, Co, Ni, Cu, Zn, Zr, and Ti. The cathode material has a volume resistivity ranging from 10 $\Omega \cdot$cm to $10^4$ $\Omega \cdot$cm. An actual molar content ratio m" of element Mn to element Fe at any position in the cathode material and a theoretical molar content ratio m of element Mn to element Fe at any position in the cathode material satisfy the following relationship: $\Delta m_c = |m''-m|/m \leq 5\%$.

A second aspect of the present disclosure provides a preparation method of a lithium manganese iron phosphate cathode material. The preparation method includes: S1, mixing a manganese source, an iron source, and an R1 source with water, to obtain a mixed salt solution; S2, mixing a phosphorus source with water, and adding a pH adjuster, to obtain a phosphorus source solution; S3, adding the mixed salt solution, the phosphorus source solution, and an oxidant into a reactor in parallel, performing a coprecipitation reaction, filtering, washing, and drying, to obtain a manganese iron phosphate precursor; S4, mixing the manganese iron phosphate precursor, a lithium source, a carbon source, and an R2 source, to obtain a mixed material; and S5, calcining the mixed material under a protective atmosphere, to obtain the lithium manganese iron phosphate cathode material.

A third aspect of the present disclosure provides a lithium manganese iron phosphate cathode material, prepared by the above-mentioned preparation method.

A fourth aspect of the present disclosure provides a manganese iron phosphate precursor. A material of the precursor has a composition represented by Formula II: $Mn_{1-x-y}Fe_xR1_yP_zO_4 \cdot nH_2O$, Formula II, where $0.1<x<0.5$, $0 \leq y \leq 0.04$, $0.95<z<1.10$, $0.95<n<1.5$, and R1 is selected from at least one of Al, Mg, Ca, Sr, V, Cr, Y, Mo, Nb, B, Al, W, La, Sm, Co, Ni, Cu, Zn, Zr, and Ti.

A fifth aspect of the present disclosure provides a preparation method of a manganese iron phosphate precursor. The preparation method includes: (1) mixing a manganese source, an iron source, and an R1 source with water, to obtain a mixed salt solution; (2) mixing a phosphorus source with water, and adding a pH adjuster, to obtain a phosphorus source solution; and (3) adding the mixed salt solution, the phosphorus source solution, and an oxidant into a reactor in parallel, performing a coprecipitation reaction, filtering, washing, and drying, to obtain the manganese iron phosphate precursor.

A sixth aspect of the present disclosure provides a manganese iron phosphate precursor, prepared by the above-mentioned preparation method.

A seventh aspect of the present disclosure provides a lithium-ion battery. The lithium-ion battery includes the above-mentioned lithium manganese iron phosphate cathode material or a cathode material prepared by the above-mentioned manganese iron phosphate precursor.

Through the above-mentioned technical solution, the following beneficial effects can be achieved by the lithium manganese iron phosphate cathode material and the preparation method thereof, the manganese iron phosphate precursor and the preparation method thereof, and the lithium-ion battery according to the present disclosure.

1. The lithium manganese iron phosphate cathode material according to the present disclosure includes specific doping elements. In addition, the cathode material has a low volume resistivity and a high purity, which effectively avoids generation of impurity phases. When the cathode material is used to prepare a lithium-ion battery, the electrochemical performance of the lithium-ion battery can be effectively improved. Specifically, the lithium-ion battery has a high specific capacity, high cycle stability, and a high energy density.

Further, elements manganese and iron in the lithium manganese iron phosphate cathode material according to the present disclosure are evenly distributed. Moreover, the primary particles are small, the carbon coating is even, and the pellet density is high, thereby further improving the electrochemical performance of the lithium-ion battery.

2. In the preparation method of the lithium manganese iron phosphate cathode material according to the present disclosure, the precursor with a specific composition is mixed with the lithium source, the carbon source, and the R2 source, and then calcined to obtain the material. The precursor includes a specific doping element R1, which may enter metal sites to form nanoparticles with a stable structure, thereby allowing the prepared lithium manganese iron phosphate cathode material to have the high purity and low volume resistivity.

Further, in the present disclosure, the manganese source, the iron source, the R1 source, the phosphorus source, and the oxidant are used as raw materials. In particular, the mixed salt solution containing the manganese source, the iron source, and the R1 source, the phosphorus source solution, and the oxidant are added to a reactor in parallel, such that metal ions can quickly combine with phosphate to form a precipitate after reacting with the oxidant to be oxidized, thereby effectively avoiding a disproportionation reaction of trivalent manganese ions in an aqueous solution and realizing simultaneous oxidation and precipitation. At the same time, the addition of liquids in parallel can avoid a phenomenon of segregation of metal caused by an excessively high concentration of ions in the solution, which may cause successive precipitation of manganese and iron. In addition, for the prepared manganese iron phosphate precursor: the metal stoichiometric ratio is stable; the molar ratio P/Me of phosphorus to metal is adjustable; the primary particles are small, the secondary particles are even, and the morphology thereof is adjustable; the structure is stable; and the synthesis process is simple, environmentally friendly and pollution-free, and suitable for industrial production.

Further, by controlling the molar ratio $K_1$ of the addition amount of the phosphorus source to the addition amount of the metal (the manganese source, the iron source, and the R1 source), the pH value of the phosphorus source solution, and the reaction temperature T to satisfy specific relationships, the molar ratio K of phosphorus to metal in the manganese iron phosphate precursor can be regulated, and then the performance of the lithium manganese iron phosphate cathode material can be regulated, allowing the prepared lithium manganese iron phosphate cathode material to have excellent electrochemical performances.

The preparation method of the lithium manganese iron phosphate cathode material according to the present disclosure is non-toxic and harmless and has advantages such as simple process, readily available raw materials, low equipment requirements. Thus, it is easy to promote and apply the preparation method of the lithium manganese iron phosphate cathode material according to the present disclosure, which may be widely used in an industrial production of the lithium manganese iron phosphate cathode material.

**BRIEF DESCRIPTION OF THE DRAWINGS**

FIG. 1 is an X-Ray Diffractometer (XRD) spectrum of a manganese iron phosphate precursor prepared in Example 1 according to the present disclosure;
FIG. 2 is a Scanning Electron Microscope (SEM) image of a manganese iron phosphate precursor prepared in Example 1 according to the present disclosure;
FIG. 3 is an Energy Dispersive Spectrometer (EDS) distribution image of Mn and Fe elements in a cross-section of a manganese iron phosphate precursor prepared in Example 1 according to the present disclosure;
FIG. 4 is an XRD spectrum of a lithium manganese iron phosphate cathode material prepared in Example 1 according to the present disclosure; and
FIG. 5 is an SEM image of a lithium manganese iron phosphate cathode material prepared in Example 1 according to the present disclosure.

**DETAILED DESCRIPTION**

In the present disclosure, endpoints and any value of the ranges shall not be limited to the exact range or value, and those ranges or values should be understood to include values close to those ranges or values. For numerical ranges, endpoints of respective ranges, an endpoint and individual point value of respective ranges, and individual point values can be combined with each other to obtain one or more new numerical ranges, which should be deemed to be specifically disclosed herein.

A first aspect of the present disclosure provides a lithium manganese iron phosphate cathode material. The cathode material has a composition represented by Formula I: $Li_dMn_{1-a-b-c}Fe_aR_bPO_4/C$, Formula I, where $0.1 \leq a \leq 0.5$, $0 < b < 0.08$, $0.9 < d \leq 1.2$, and R is selected from at least one of Al, Mg, Ca, Sr, V, Cr, Y, Mo, Nb, B, Al, W, La, Sm, Co, Ni, Cu, Zn, Zr, and Ti.

The cathode material has a volume resistivity ranging from $10\ \Omega \cdot cm$ to $10^4\ \Omega \cdot cm$. An actual molar content ratio m" of element Mn to element Fe at any position in the cathode material and a theoretical molar content ratio m of element Mn to element Fe at any position in the cathode material satisfy the following relationship: $\Delta m_c = |m"-m|/m \leq 5\%$.

In the present disclosure, the lithium manganese iron phosphate cathode material includes specific doping elements. In addition, the cathode material has a low volume resistivity and a high purity. Moreover, manganese and iron elements in the lithium manganese iron phosphate cathode material are evenly distributed, which effectively avoids generation of impurity phases. Specifically, the actual molar content ratio of element Mn to element Fe at any position slightly differs from the theoretical molar content ratio of element Mn to element Fe at any position, indicating an even distribution of elements manganese and iron in the lithium manganese iron phosphate cathode material without occurrence of segregation. When the lithium manganese iron phosphate cathode material is used to prepare a lithium-ion battery, the lithium-ion battery can be effectively improved in terms of electrochemical performance. Specifically, the lithium-ion battery has high specific capacity, cycle stability, and energy density.

In the present disclosure, the actual molar content ratio m" of element Mn to element Fe at any position in the cathode material is measured by an EDS method.

In the present disclosure, the theoretical molar content ratio m of element Mn to element Fe at any position in the cathode material satisfy $m=(1-a-b-c)/a$.

In the present disclosure, when testing an actual content ratio m" of element Mn and element Fe, an area of the selected position accounts for 1% to 30% of an area of the selected cathode material particles. In the present disclosure, when the area of the selected position when testing the actual content ratio m" of element Mn and element Fe is ensured to satisfy the above-mentioned range, a feasibility of the test can be guaranteed, and an average effect can be effectively avoided, thereby better characterizing uniformity of the distribution of element Mn and element Fe.

Further, in Formula I, $0.15 < a < 0.45$, $0 < b < 6$, and $0.95 < d < 1.15$.

Further, in Formula I, R is selected from at least one of Al, Co, Ni, Mg, Al, W, Nb, Zr, and Ti.

In a specific embodiment of the present disclosure, the lithium manganese iron phosphate cathode material includes more than two different types of element R. Specifically, the lithium manganese iron phosphate cathode material has a composition represented by Formula II:

$Li_dMn_{1-a-b-c}Fe_aR'_bR''_cPO_4/C$, Formula II, where: $0.1 \leq a \leq 0.5$, $0 < b < 0.04$, $0 \leq c \leq 0.04$, and $0.9 < d \leq 1.2$; R' is selected from at least one of Al, Cu, Zn, Zr, and Ti; and R'' is selected from at least one of Mg, Ca, Sr, V, Cr, Co, Ni, Y, Mo, Nb, B, W, La, and Sm.

In a specific embodiment of the present disclosure, in Formula II, $0.15 \leq a \leq 0.45$, $0 < b \leq 0.03$, $0 < c \leq 0.03$, and $0.95 < d \leq 1.15$.

In a specific embodiment of the present disclosure, in Formula II, R' is selected from at least one of Al, Zr, and Ti; and R'' is selected from at least one of Co, Ni, Mg, Y, La, W, and Nb.

Further, the cathode material has a volume resistivity ranging from $10\ \Omega \cdot cm$ to $10^3\ \Omega \cdot cm$.

Further, the cathode material has a volume resistivity ranging from $10\ \Omega \cdot cm$ to $500\ \Omega \cdot cm$.

According to the present disclosure, based on a total weight of the lithium manganese iron phosphate cathode material, a carbon content ranges from 0.5 wt% to 5 wt%.

In the present disclosure, when the carbon content in the lithium manganese iron phosphate cathode material satisfies the above-mentioned range, the cathode material can have good electronic conductivity, thereby improving the specific capacity, cycle stability, and rate performance of the lithium-ion battery prepared by the cathode material.

Further, based on the total weight of the lithium manganese iron phosphate cathode material, the carbon content ranges from 1 wt% to 3 wt%.

Further, $\Delta m_c = |m''-m|/m \leq 3\%$.

According to the present disclosure, the cathode material has a pellet density ranging from 1.5 $g/cm^3$ to 3.5 $g/cm^3$, and preferably, from 2 $g/cm^3$ to 3 $g/cm^3$.

According to the present disclosure, the cathode material has a specific surface area ranging from 10 $m^2/g$ to 60 $m^2/g$, and preferably, from 10 $m^2/g$ to 25 $m^2/g$.

According to the present disclosure, the lithium manganese iron phosphate cathode material has a secondary particle structure formed by primary particles.

According to the present disclosure, the cathode material has an average particle size ranging from 1 $\mu$m to 50 $\mu$m, and preferably, from 7 $\mu$m to 15 $\mu$m.

According to the present disclosure, the primary particles have an average particle size ranging from 10 nm to 500 nm.

In the present disclosure, the cathode material has a small primary particle size, which shortens a diffusion path of lithium ions, thereby improving ion conductivity of the cathode material. When the cathode material is used in the lithium-ion battery, the lithium-ion battery can be effectively improved in terms of electrochemical performance.

Further, the primary particles have an average particle size ranging from 10 nm to 200 nm.

A second aspect of the present disclosure provides a preparation method of a lithium manganese iron phosphate cathode material. The preparation method includes: S1, mixing a manganese source, an iron source, and an R1 source with water, to obtain a mixed salt solution; S2, mixing a phosphorus source with water, and adding a pH adjuster, to obtain a phosphorus source solution; S3, adding the mixed salt solution, the phosphorus source solution, and an oxidant into a reactor in parallel, performing a coprecipitation reaction, filtering, washing, and drying, to obtain a manganese iron phosphate precursor; S4, mixing the manganese iron phosphate precursor, a lithium source, a carbon source, and an R2 source, to obtain a mixed material; and S5, calcining the mixed material under a protective atmosphere, to obtain the lithium manganese iron phosphate cathode material.

In the present disclosure, R1 and R2 are only used to distinguish the timing of adding the R source, and do not limit an element type of the R source. Both R1 source and R2 source are designed to introduce the R source into the cathode material.

In the present disclosure, the precursor with a specific composition is mixed with the lithium source, the carbon source, and the R2 source, and then calcined to obtain the material. The precursor includes a specific doping element R1, which may enter metal sites to form nanoparticles with a stable structure, thereby allowing the prepared lithium manganese iron phosphate cathode material to have the high purity and low volume resistivity. When the prepared lithium manganese iron phosphate cathode material is used in the lithium-ion battery, the electrochemical performance of the lithium-ion battery can be effectively improved. Specifically, the lithium-ion battery has a high specific capacity, high cycle stability, and a high energy density.

In the present disclosure, the manganese source, the iron source, the R1 source, the phosphorus source, and the oxidant are used as raw materials. In particular, the mixed salt solution containing the manganese source, the iron source, and the R1 source, the phosphorus source solution, and the oxidant are added to a reactor in parallel, such that metal ions can quickly combine with phosphate to form a precipitate after reacting with the oxidant to be oxidized, thereby effectively avoiding a disproportionation reaction of trivalent manganese ions in an aqueous solution and realizing simultaneous oxidation and precipitation. At the same time, the addition of liquids in parallel can avoid a phenomenon of segregation of metal caused by an excessively high concentration of ions in the solution, which may cause successive precipitation of manganese and iron. In addition, for the prepared manganese iron phosphate precursor: the metal stoichiometric ratio is stable; the molar ratio P/Me of phosphorus to metal is adjustable; the primary particles are small, the secondary particles are even, and the morphology thereof is adjustable; the structure is stable; and the synthesis process is simple, environmentally friendly and pollution-free, and suitable for industrial production.

According to the present disclosure, the manganese iron phosphate precursor has a composition represented by Formula II:

$Mn_{1-x-y}Fe_xR1_yP_zO_4 \cdot nH_2O$, Formula II, where $0.1<x<0.5$, $0 \leq y \leq 0.04$, $0.95<z<1.10$, $0.95<n<1.5$, and R1 is selected from at least one of Al, Mg, Ca, Sr, V, Cr, Y, Mo, Nb, B, Al, W, La, Sm, Co, Ni, Cu, Zn, Zr, and Ti.

Further, in Formula II, $0.15<x<0.45$, $0<y<0.03$, $0.95<z<1.05$, and $0.95 \leq n \leq 1.2$, and R1 is selected from at least one of Al, Co, Ni, Mg, Al, W, Nb, Zr, and Ti.

According to the present disclosure, the lithium manganese iron phosphate cathode material has a composition represented by Formula I:

$Li_dMn_{1-a-b-c}Fe_aR_bPO_4PO_4/C$, Formula I, where $0.1 \leq a \leq 0.5$, $0<b<0.08$, $0.9<d<1.2$, and R is selected from at least one of Al, Mg, Ca, Sr, V, Cr, Y, Mo, Nb, B, Al, W, La, Sm, Co, Ni, Cu, Zn, Zr, and Ti.

Further, in Formula I, $0.15 \leq a \leq 0.45$, $0<b \leq 0.06$, and $0.95<d \leq 1.15$.

Further, in Formula I, R is selected from at least one of Al, Co, Ni, Mg, Al, W, Nb, Zr, and Ti.

According to the present disclosure, an actual molar content ratio m' of element Mn to element Fe at any position in the manganese iron phosphate precursor and a theoretical molar content ratio $m_0$ of element Mn to element Fe at any position in the manganese iron phosphate precursor satisfy the following relationship: $\Delta m_p = |m'-m_0|/m_0 \leq 5\%$.

In the present disclosure, manganese and iron elements in the manganese iron phosphate precursor are evenly distributed. In particular, the actual molar content ratio of element Mn to element Fe at any position slightly differs from the theoretical molar content ratio of element Mn to element Fe at any position, indicating an even distribution of elements manganese and iron in the manganese iron phosphate precursor without occurrence of segregation. When the precursor is used to prepare a cathode material, manganese, iron, and phosphorus elements in the cathode material can be evenly distributed, which avoids the segregation of elements in the cathode material, thereby significantly improving the capacity performance and cycle stability of the lithium-ion battery including the lithium manganese iron phosphate lithium cathode material.

In the present disclosure, the theoretical molar content ratio $m_0$ of element Mn to element Fe at any position in the manganese iron phosphate precursor satisfy $m_0 = (1-x-y)/x$.

In the present disclosure, the actual molar content ratio m' of element Mn to element Fe at any position in the manganese iron phosphate precursor is measured by an EDS method.

In the present disclosure, when testing an actual content ratio m' of element Mn and element Fe, an area of the selected position accounts for 1% to 30% of an area of the selected precursor particles. In the present disclosure, when the area of the selected position when testing the actual content ratio m' of element Mn and element Fe is ensured to satisfy the above-mentioned range, a feasibility of the test can be guaranteed, and an average effect can be effectively avoided, thereby better characterizing uniformity of the distribution of element Mn and element Fe.

Further, $\Delta m_p = |m'-m_0|/m_0 \leq 3\%$.

According to the present disclosure, the manganese iron phosphate precursor has a median particle size $D_{50}$ ranging from 0.5 μm to 10 μm, and preferably, from 0.5 μm to 5 μm.

According to the present disclosure, primary particles of the manganese iron phosphate precursor have a size ranging from 20 nm to 200 nm, and preferably, from 20 nm to 100 nm.

According to the present disclosure, the manganese iron phosphate precursor has a tap density ranging from 0.50 g/cm³ to 1.50 g/cm³, and preferably, from 0.80 g/cm³ to 1.50 g/cm³.

According to the present disclosure, the manganese iron phosphate precursor has a specific surface area ranging from 10 m²/g to 100 m²/g, and preferably, from 10 m²/g to 40 m²/g.

In the present disclosure, K is a ratio of a phosphorus content to a total metal molar amount in the manganese iron phosphate precursor, satisfying K=0.95-1.10, which is a value of z in Formula II.

According to the present disclosure, the preparation method of the manganese iron phosphate precursor satisfies the following relationship:

$K = (0.033K_1+0.5) \cdot L^{-0.3} \cdot T^{0.2} - 0.05$, Formula III, where: K is a ratio of n(P) to [n(Mn)+n(Fe)+n(R1)] in the manganese iron phosphate precursor, $K_1$ is a molar ratio of an addition amount of the phosphorus source based on n1(P) to a total addition amount of the manganese source, the iron source, and the R1 source based on [n1(Mn)+n1(Fe)+n1(M)], L is a pH value of the phosphorus source solution, and T is a temperature of the coprecipitation reaction.

In the present disclosure, by controlling the molar ratio $K_1$ of the addition amount of the phosphorus source to the addition amount of the metal (the manganese source, the iron source, and the R1 source), the pH value of the phosphorus source solution, and the reaction temperature T to satisfy a specific relationship, the molar ratio K of phosphorus to metal in the manganese iron phosphate precursor can be regulated, and thus the performance of the lithium manganese iron phosphate cathode material can be regulated, allowing the prepared lithium manganese iron phosphate cathode material to have excellent electrochemical performances.

According to the present disclosure, in Formula III, $0.9 \leq K_1 \leq 2$, $0 < L \leq 3$, and $30°C \leq T \leq 90°C$.

Further, in Formula III, $1 \leq K_1 \leq 1.5$, $1.5 \leq L \leq 2.5$, and $60°C \leq T \leq 90°C$.

According to the present disclosure, in step S1, a concentration of the mixed salt solution ranges from 0.1 mol/L to 4 mol/L, and preferably, from 0.2 mol/L to 2 mol/L.

In the present disclosure, the type of the manganese source in step S1 is not specifically limited. Conventional soluble manganese sources in the art may be adopted, including but not limited to, a divalent manganese salt. Preferably, the divalent manganese salt is selected from at least one of manganese sulfate, manganese chloride, manganese nitrate, and manganese acetate.

In the present disclosure, the type of the iron source in step S1 is not specifically limited, and conventional soluble iron sources in the art may be adopted, including but not limited to a divalent iron salt. Preferably, the divalent iron salt is selected from at least one of ferrous sulfate, ferrous chloride, and ferrous nitrate.

In the present disclosure, the types of R1 source and R2 source are not specifically limited. Conventional soluble R-containing compounds in the art capable of providing at least one of Al, Mg, Ca, Sr, V, Cr, Y, Mo, Nb, B, Al, W, La, Sm, Co, Ni, Cu, Zn, Zr, and Ti may be adopted, including but not limited to, at least one of R-containing sulfate, nitrate, acetate, and chloride. Preferably, the R source is selected from at least one of titanyl sulfate, zirconium nitrate, and aluminum sulfate.

In a specific embodiment of the present disclosure, the types of R1 source and R2 source are different. Specifically, the R1 source is selected from a soluble R-containing compound capable of providing at least one of Al, Cu, Zn, Zr, and Ti; and the R2 source is selected from compounds capable of providing at least one element of Mg, Ca, Sr, V, Cr, Co, Ni, Y, Mo, Nb, B, W, La, and Sm.

According to the present disclosure, in step S2, a concentration of the phosphorus source solution ranges from 0.2 mol/L to 20 mol/L, and preferably, from 1 mol/L to 15 mol/L.

In the present disclosure, the type of the phosphorus source in step S2 is not specifically limited. The conventional soluble phosphorus source in the art may be adopted, including but not limited to, one of phosphoric acid, sodium phosphate, sodium dihydrogen phosphate, disodium hydrogen phosphate, ammonium dihydrogen phosphate, and ammonium monohydrogen phosphate, and preferably, selected from at least one of phosphoric acid, sodium dihydrogen phosphate, and ammonium dihydrogen phosphate.

In the present disclosure, in step S2, the phosphorus source solution has a pH value ranging from 0 to 3, and preferably, from 1.5 to 2.5.

In the present disclosure, the type of the pH adjuster in step S2 is not specifically limited, as long as it can achieve the purpose of adjusting the pH value of the phosphorus source solution. For example, the pH adjuster is an acid solution or an alkaline solution. Preferably, the pH adjuster is selected from at least one of sodium hydroxide, ammonia water, sulfuric acid, hydrochloric acid, and nitric acid. In the present disclosure, the amount of the pH adjuster is not specifically limited, as long as the pH value of the phosphoric acid solution can be within the above-mentioned range.

According to the present disclosure, in step S3, a molar ratio of an addition amount of the phosphorus source based on $n1(P)$ to a total addition amount of the manganese source, the iron source, and the R1 source based on $[n1(Mn)+n1(Fe)+n1(R1)]$ is (1 to 5):1.

In the present disclosure, by controlling the total addition amount of the phosphorus source, the manganese source, the iron source, and the R1 source to satisfy the above-mentioned range, a controllable regulation of a molar ratio of P/Me in the cathode material can be achieved, thereby regulating the performance of the lithium manganese iron phosphate cathode material, allowing the prepared lithium manganese iron phosphate cathode material to have excellent electrochemical performances.

Further, in step (3), a molar ratio of an addition amount of the phosphorus source based on $n1(P)$ to a total addition amount of the manganese source, the iron source, and the R1 source based on $[n1(Mn)+n1(Fe)+n1(R1)]$ is (1 to 3):1.

According to the present disclosure, in step S3, a molar ratio of an addition amount of the oxidant to a total addition amount of the manganese source, the iron source, and the R1 source based on $[n1(Mn)+n1(Fe)+n1(R1)]$ is (1 to 10):1.

Further, by controlling the total addition amount of the oxidant, the manganese source, the iron source, and the R1 source to satisfy the above-mentioned relationship, degree of oxidation of the metal elements in the cathode material can be controlled, allowing the prepared lithium manganese iron phosphate cathode material to have a low volume resistivity and high purity. When the cathode material is used in the lithium-ion battery, the lithium-ion battery can have a high specific capacity, high cycle stability, and a high energy density.

Further, in step S3, a molar ratio of an addition amount of the oxidant to a total addition amount of the manganese source, the iron source, and the R1 source based on $[n1(Mn)+n1(Fe)+n1(R1)]$ is (1 to 5):1.

In the present disclosure, the type of the oxidant in step S3 is not specifically limited, and conventional oxidants in the art may be adopted, including but not limited to, ozone, potassium permanganate, sodium persulfate, ammonium persulfate, sodium hypochlorite, and sodium ferrate. Preferably, the oxidant is selected from at least one of ozone, potassium permanganate, sodium persulfate, and ammonium persulfate.

In the present disclosure, a speed at which the mixed salt solution, the phosphorus source solution, and the oxidant are added to the reactor in parallel in step S3 is not specifically limited. The conventional speed in the art may be adopted, as long as manganese and iron can be evenly co-precipitated.

According to the present disclosure, the coprecipitation reaction is performed under stirring.

According to the present disclosure, a stirring speed ranges from 200 r/min to 800 r/min, and preferably, from 400 r/min to 800r/min.

According to the present disclosure, an aging reaction is performed subsequent to the coprecipitation reaction.

According to the present disclosure, conditions for the aging reaction include: an aging temperature ranging from 30°C to 90°C and an aging duration ranging from 1 hour to 10 hours.

Further, the conditions for the aging reaction include: an aging temperature ranging from 60°C to 90°C and an aging duration ranging from 3 hours to 6 hours.

According to the present disclosure, a washing detergent for the washing is water ranging from 20°C to 90°C.

Further, the washing detergent for the washing is water ranging from 60°C to 90°C.

In the present disclosure, the washing detergent for the washing is pure water.

According to the present disclosure, conditions for the drying include: a drying temperature ranging from 50°C to 200°C and a drying duration ranging from 2 hours to 8 hours.

Further, the conditions for the drying include: a drying temperature ranging from 80°C to 150°C and a drying duration ranging from 3 hours to 6 hours.

According to the present disclosure, in step S4, said mixing is performed in the presence of a solvent to obtain a mixed slurry, and the mixed material is obtained after removing the solvent in the mixed slurry.

In the present disclosure, preferably, said mixing is performed in the presence of the solvent, such that the manganese iron phosphate precursor, the lithium source, the carbon source, and the R2 source can be fully and evenly mixed. In this way, the prepared lithium manganese iron phosphate cathode material can have a relatively higher purity and a low volume resistivity.

In the present disclosure, the type of the solvent is not specifically limited, as long as the mixed material can form an even slurry. For example, the solvent may be water, ethanol, etc. Preferably, the solvent is water. There is no specific limitation on the amount of the solvent, which is also based on the ability to form an even slurry.

According to the present disclosure, the lithium source is selected from at least one of lithium hydroxide, lithium carbonate, lithium dihydrogen phosphate, lithium oxalate, lithium nitrate, and lithium acetate. Preferably, the lithium source is selected from at least one of lithium hydroxide, lithium carbonate, and lithium dihydrogen phosphate.

According to the present disclosure, the carbon source is selected from at least one of glucose, sucrose, fructose, cellulose, starch, citric acid, polyacrylic acid, polyethylene glycol, and dopamine. Preferably, the carbon source is selected from at least one of glucose, sucrose, starch, and cellulose.

In the present disclosure, the method for removing the solvent from the mixed slurry is not specifically limited. The conventional methods in the art may be used. As an example, the solvent in the mixed slurry may be removed by direct evaporation. The temperature and process of the evaporation may adopt those known to those skilled in the art. As another example, static drying or spray drying may be adopted to remove the solvent from the mixed slurry.

According to the present disclosure, in step S5, conditions for the calcining include: a calcination temperature ranging from 500°C to 1,000°C and a calcination duration ranging from 4 hours to 20 hours.

Further, in step S5, the conditions for the calcining include: a calcination temperature ranging from 600°C to 800°C and a calcination duration ranging from 6 hours to 12 hours.

In the present disclosure, the protective atmosphere is selected from a nitrogen atmosphere and/or an argon atmosphere.

A third aspect of the present disclosure provides a lithium manganese iron phosphate cathode material, prepared by the above-mentioned preparation method.

A fourth aspect of the present disclosure provides a manganese iron phosphate precursor. A material of the precursor has a composition represented by Formula II: $Mn_{1-x-y}Fe_xR1_yP_zO_4 \cdot nH_2O$, Formula II, where $0.1<x<0.5$, $0 \leq y \leq 0.04$, $0.95<z<1.10$, $0.95<n<1.5$, and R1 is selected from at least one of Al, Mg, Ca, Sr, V, Cr, Y, Mo, Nb, B, Al, W, La, Sm, Co, Ni, Cu, Zn, Zr, and Ti.

Further, in Formula II, $0.15<x<0.45$, $0<y<0.03$, $0.95<z<1.05$, $0.95 \leq n \leq 1.2$, and R is selected from at least one of Al, Co, Ni, Mg, Al, W, Nb, Zr, and Ti.

In the present disclosure, an actual molar content ratio m' of element Mn to element Fe at any position in the manganese iron phosphate precursor and a theoretical molar content ratio $m_0$ of element Mn to element Fe at any position in the manganese iron phosphate precursor satisfy the following relationship: $\Delta m_p = |m'-m_0|/m_0 \leq 5\%$.

Further, $\Delta m_p = |m'-m_0|/m_0 \leq 3\%$.

In the present disclosure, the manganese iron phosphate precursor has a median particle size ranging from 0.5 $\mu$m to 10 $\mu$m, and preferably, from 0.5 $\mu$m to 5 $\mu$m.

In the present disclosure, primary particles of the manganese iron phosphate precursor have a size ranging from 20 nm to 200 nm, and preferably, from 20 nm to 100 nm.

In the present disclosure, the manganese iron phosphate precursor has a tap density ranging from 0.50 g/cm$^3$ to

1.50 g/cm$^3$, and preferably, from 0.80 g/cm$^3$ to 1.50 g/cm$^3$.

In the present disclosure, the manganese iron phosphate precursor has a specific surface area ranging from 10 m$^2$/g to 100 m$^2$/g, and preferably, from 10 m$^2$/g to 40 m$^2$/g.

A fifth aspect of the present disclosure provides a preparation method of a manganese iron phosphate precursor. The preparation method includes: (1) mixing a manganese source, an iron source, and an R1 source with water, to obtain a mixed salt solution; (2) mixing a phosphorus source with water, and adding a pH adjuster, to obtain a phosphorus source solution; and (3) adding the mixed salt solution, the phosphorus source solution, and an oxidant into a reactor in parallel, performing a coprecipitation reaction, filtering, washing, and drying, to obtain the manganese iron phosphate precursor.

In the present disclosure, the preparation method of the manganese iron phosphate precursor satisfies the following relationship:

$K=(0.033K_1+0.5)\cdot L^{-0.3}\cdot T^{0.2}-0.05$, Formula III, where: K is a ratio of n(P) to [n(Mn)+n(Fe)+n(R1)] in the manganese iron phosphate precursor, $K_1$ is a molar ratio of an addition amount of the phosphorus source based on n1(P) to a total addition amount of the manganese source, the iron source, and the R1 source based on [n1(Mn)+n1(Fe)+n1(R1)], L is a pH value of the phosphorus source solution, and T is a temperature of the coprecipitation reaction.

In the present disclosure, in Formula III, $0.9 \leq K_1 \leq 2$, $0 < L \leq 3$, and $30°C \leq T \leq 90°C$.

Further, in Formula III, $1 \leq K_1 \leq 1.5$, $1.5 \leq L \leq 2.5$, and $60°C \leq T \leq 90°C$.

According to the present disclosure, in step (1), a concentration of the mixed salt solution ranges from 0.1 mol/L to 4 mol/L, and preferably, from 0.2 mol/L to 2 mol/L.

In the present disclosure, the type of the manganese source in step (1) is not specifically limited. The conventional soluble manganese sources in the art may be adopted, including but not limited to, a divalent manganese salt. Preferably, the divalent manganese salt is selected from at least one of manganese sulfate, manganese chloride, manganese nitrate, and manganese acetate.

In the present disclosure, the type of the iron source in step (1) is not specifically limited, and conventional soluble iron sources in the art may be adopted, including but not limited to, a divalent iron salt. Preferably, the divalent iron salt is selected from at least one of ferrous sulfate, ferrous chloride, and ferrous nitrate.

In the present disclosure, the type of R1 source in step (1) is not specifically limited. The conventional soluble R1 source in the art capable of providing element M may be adopted, including but not limited to, at least one of M-containing sulfate, nitrate, acetate, and chloride. Preferably, the R1 source is selected from at least one of titanyl sulfate, zirconium nitrate, and aluminum sulfate.

In the present disclosure, in step (2), a concentration of the phosphorus source solution ranges from 0.2 mol/L to 20 mol/L, and preferably, from 1 mol/L to 15 mol/L.

In the present disclosure, the type of the phosphorus source in step (2) is not specifically limited. The conventional soluble phosphorus source in the art may be adopted, including but not limited to, one of phosphoric acid, sodium phosphate, sodium dihydrogen phosphate, disodium hydrogen phosphate, ammonium dihydrogen phosphate, and ammonium monohydrogen phosphate, and preferably, selected from at least one of phosphoric acid, sodium dihydrogen phosphate, and ammonium dihydrogen phosphate.

In the present disclosure, in step (2), the phosphorus source solution has a pH value ranging from 0 to 3, and preferably, from 1.5 to 2.5.

In the present disclosure, the type of the pH adjuster in step (2) is not specifically limited, as long as it can achieve the purpose of adjusting the pH value of the phosphorus source solution. For example, the pH adjuster is an acid solution or an alkaline solution. Preferably, the pH adjuster is selected from at least one of sodium hydroxide, ammonia water, sulfuric acid, hydrochloric acid, and nitric acid. In the present disclosure, the amount of the pH adjuster is not specifically limited, as long as the pH value of the phosphoric acid solution can be within the above-mentioned range.

In the present disclosure, in step (3), a molar ratio of an addition amount of the phosphorus source based on n1(P) to a total addition amount of the manganese source, the iron source, and the R1 source based on [n1(Mn)+n1(Fe)+n1(R1)] is (1 to 5):1, and preferably, (1 to 3):1.

In the present disclosure, in step (3), a molar ratio of an addition amount of the oxidant to a total addition amount of the manganese source, the iron source, and the R1 source based on [n1(Mn)+n1(Fe)+n1(R1)] is (1 to 10):1, and preferably, (1 to 5):1.

In the present disclosure, the type of the oxidant in step (3) is not specifically limited. The conventional oxidants in the art may be adopted, including but not limited to ozone, potassium permanganate, sodium persulfate, ammonium persulfate, sodium hypochlorite, and sodium ferrate. Preferably, the oxidant is selected from at least one of ozone, potassium permanganate, sodium persulfate, and ammonium persulfate.

In the present disclosure, a speed at which the mixed salt solution, the phosphorus source solution, and the oxidant are added to the reactor in parallel in step (3) is not specifically limited. The conventional speed in the art may be adopted as long as manganese and iron can be evenly co-precipitated.

In the present disclosure, the coprecipitation reaction is performed under stirring.

In the present disclosure, a stirring speed ranges from 200 r/min to 800 r/min, and preferably, from 400 r/min to 800r/min.

In the present disclosure, an aging reaction is performed subsequent to the coprecipitation reaction.

In the present disclosure, conditions for the aging reaction include: an aging temperature ranging from 30°C to 90°C and an aging duration ranging from 1 hour to 10 hours.

Further, the conditions for the aging reaction include: an aging temperature ranging from 60°C to 90°C and an aging duration ranging from 3 hours to 6 hours.

In the present disclosure, a washing detergent for the washing is water ranging from 20°C to 90°C.

Further, the washing detergent for the washing is water ranging from 60°C to 90°C.

In the present disclosure, the washing detergent for the washing is pure water.

In the present disclosure, conditions for the drying include: a drying temperature ranging from 50°C to 300°C and a drying duration ranging from 2 hours to 8 hours.

Further, the conditions for the drying include: a drying temperature ranging from 80°C to 200°C and a drying duration ranging from 3 hours to 6 hours.

A sixth aspect of the present disclosure provides a manganese iron phosphate precursor prepared by the above-mentioned preparation method.

A seventh aspect of the present disclosure provides a lithium-ion battery. The lithium-ion battery includes the above-mentioned lithium manganese iron phosphate cathode material or a cathode material prepared by the above-mentioned precursor of iron manganese phosphate.

The present disclosure will be described in detail below by way of examples. In the following examples:

Particle size test: test by means of Mastersizer 2000 laser particle size analyzer from Marvern.

Morphology test: test by means of S-4800 scanning electron microscope from Hitachi, Ltd, Japan.

The actual content ratio m" of element Mn to element Fe at any position in the precursor of the cathode material and the actual content ratio m" of element Mn to element Fe at any position in the cathode material: test by means of $50mm^2$ EDS from Oxford energy spectrum manufacturer.

Specific surface area: test by means of Tristar II3020 specific surface area tester from Micromertics, USA.

Tap density: test by means of BT-30 tap density tester from Baxter Company.

Pellet density: test by means of MCP-PD51 pellet density meter from Mitsubishi Chemical Corporation, Japan.

Volume resistivity of the cathode material: test by means of MCP-PD51 powder compacted resistance tester from Mitsubishi Chemical Corporation, Japan.

Carbon content in the cathode material: test by means of CS-i carbon-sulfur analyzer from Elt, Germany.

Content of each element in the cathode material and the precursor: test by means of 5800 ICP-OES spectrometer from Agilent, USA.

The raw materials used in the examples and comparative examples are all commercially available products.

**Example 1**

(1) A certain mass of manganese sulfate, ferrous sulfate, and titanyl sulfate were weighed according to a molar ratio of n(Mn):n(Fe):n(Ti)=65:34:1 and dissolved in deionized water, to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) A mixture of equal volumes of the mixed salt solution, the phosphorus source solution, and a sodium persulfate solution (2 mol/L) was added to a reactor in parallel for a co-precipitation reaction. A reaction temperature was 90°C, and a stirring speed was 500 r/min. A liquid addition was completed in 3 hours. After the liquid addition was complete, an aging reaction was performed at aging temperature of 90°C with a stirring speed of 500r/min for 3 hours. n(oxidant)/[n1(Mn)+n1(Fe)+n1(M)]=1, and $K_1$=n1(P)/[n1(Mn)+n1(Fe)+n1(M)]=1.4.

(4) After the reaction was completed, a reaction slurry was filtered and washed with pure water twice the volume of the slurry to obtain a filter cake. The filter cake was dried at 105°C for 3 hours to obtain a manganese iron phosphate precursor P1.

The manganese iron phosphate precursor P1 had a composition of $Mn_{0.648}Fe_{0.342}Ti_{0.01}P_{1.04}O_4 \cdot H_2O$, a median particle size $D_{50}$ of 2.36 $\mu$m, a tap density of 0.96 $g/cm^3$, and a specific surface area of 26.6 $m^2/g$. A ratio of manganese, iron, and titanium in the manganese iron phosphate precursor was n(Mn):n(Fe):n(Ti)=64.8:34.2:1, and a molar ratio K of a phosphorus content to a total metal content was measured, i.e., K=n(P)/[n(Mn)+n(Fe)+n(M)]=1.04.

(5) The above-mentioned prepared manganese iron phosphate precursor, lithium carbonate ($Li_2CO_3$), magnesium carbonate, and glucose (based on C) according to a molar ratio of 1:0.52:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A1 was obtained after sieving.

The lithium manganese iron phosphate cathode material A1 had a composition of $Li_{1.04}Mn_{0.642}Fe_{0.339}Ti_{0.01}Mg_{0.01}PO_4/C$, a pellet density of 2.15 g/cm$^3$, a specific surface area of 18.6 m$^2$/g, and a carbon content of 1.84 wt%, and an average particle size of primary particles thereof was 80 nm.

**Example 2**

(1) A certain mass of manganese sulfate, ferrous sulfate, and titanyl sulfate were weighed according to a molar ratio of n(Mn):n(Fe):n(Ti)=65:34:1 and dissolved in deionized water, to prepare a 1 mol/L mixed salt solution.
(2) A certain mass of concentrated phosphoric acid was weighed and diluted by adding deionized water, and sodium hydroxide at a concentration of 40 wt% was added to adjust pH of the solution to 1.5, to prepare a 1.3 mol/L phosphorus source solution.
(3) A mixture of equal volumes of the mixed salt solution, the phosphorus source solution, and an ammonium persulfate solution (1.5 mol/L) was added to a reactor in parallel for a co-precipitation reaction. A reaction temperature was 60°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. n(oxidant)/[n1(Mn)+n1(Fe)+n1(M)]=1.5, and $K_1$=n1(P)/[n1(Mn)+n1(Fe)+n1(M)]=1.3.
(4) After the reaction was completed, a reaction slurry was filtered and washed with pure water twice the volume of the slurry to obtain a filter cake. The filter cake was dried at 105°C for 3 hours to obtain a manganese iron phosphate precursor P2.
The manganese iron phosphate precursor P2 had a composition of $Mn_{0.652}Fe_{0.338}Ti_{0.01}P_{1.09}O_4 \cdot H_2O$, a median particle size $D_{50}$ of 1.65 μm, a tap density of 1.14 g/cm$^3$, and a specific surface area of 26.5 m$^2$/g. A ratio of manganese, iron, and titanium in the manganese iron phosphate precursor was n(Mn):n(Fe):n(Ti)=65.2:33.8:1, and a molar ratio K of a phosphorus content to a total metal content was measured, i.e., K=n(P)/[n(Mn)+n(Fe)+n(M)]=1.04.
(5) The above-mentioned prepared manganese iron phosphate precursor, lithium hydroxide, magnesium carbonate, and sucrose (based on C) according to a molar ratio of 1:1.03:0.01:0.7 were mixed with pure water. The mixture was mixed evenly by mechanical stirring to obtain a slurry.
(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A2 was obtained after sieving.

The lithium manganese iron phosphate cathode material A2 had a composition of $Li_{1.03}Mn_{0.645}Fe_{0.335}Ti_{0.01}Mg_{0.01}PO_4/C$, a pellet density of 2.20 g/cm$^3$, a specific surface area of 21.2 m$^2$/g, and a carbon content of 2.09 wt%, and an average particle size of primary particles thereof was 60 nm.

**Example 3**

(1) A certain mass of manganese chloride, ferrous sulfate, and titanyl sulfate were weighed according to a molar ratio of n(Mn):n(Fe):n(Ti)=65:34:1 and dissolved in deionized water, to prepare a 2 mol/L mixed salt solution.
(2) A certain mass of ammonium dihydrogen phosphate was weighed and dissolved in deionized water, and dilute sulfuric acid at a concentration of 30 wt% was added to adjust pH of the solution to 2.2, to prepare a 3 mol/L phosphorus source solution.
(3) A mixture of equal volumes of the mixed salt solution, the phosphorus source solution, and a sodium permanganate solution (2 mol/L) was added to a reactor in parallel for a co-precipitation reaction. A reaction temperature was 90°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. n(oxidant)/[n1(Mn)+n1(Fe)+n1(M)]=1, and $K_1$=n1(P)/[n1(Mn)+n1(Fe)+n1(M)]=1.5.
(4) After the reaction was completed, a reaction slurry was filtered and washed with pure water twice the volume of the slurry to obtain a filter cake. The filter cake was dried at 105°C for 3 hours to obtain a manganese iron phosphate precursor P3.

The manganese iron phosphate precursor P3 had a composition of $Mn_{0.647}Fe_{0.343}Ti_{0.01}P_{1.02}O_4 \cdot H_2O$, a median particle size $D_{50}$ of 3.78 $\mu$m, a tap density of 1.02 $g/cm^3$, and a specific surface area of 22.1 $m^2/g$. A ratio of manganese, iron, and titanium in the manganese iron phosphate precursor was n(Mn):n(Fe):n(Ti)=64.7:34.3:1, and a molar ratio K of a phosphorus content to a total metal content was measured, i.e., K=n(P)/[n(Mn)+n(Fe)+n(M)]=1.02.

(5) The above-mentioned prepared manganese iron phosphate precursor, lithium hydroxide, magnesium carbonate, and sucrose (based on C) according to a molar ratio of 1:1.03:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A3 was obtained after sieving.

The lithium manganese iron phosphate cathode material A3 had a composition of $Li_{1.03}Mn_{0.640}Fe_{0.340}Ti_{0.01}Mg_{0.01}PO_4/C$, a pellet density of 2.19 $g/cm^3$, a specific surface area of 18.3 $m^2/g$, and a carbon content of 2.08 wt%, and an average particle size of primary particles thereof was 80 nm.

**Example 4**

(1) A certain mass of manganese chloride, iron chloride, and titanyl sulfate were weighed according to a molar ratio of n(Mn):n(Fe):n(Ti)=75:24:1 and dissolved in deionized water, to prepare a 1.8 mol/L mixed salt solution.

(2) A certain mass of sodium dihydrogen phosphate was weighed and dissolved in deionized water, and dilute sulfuric acid at a concentration of 30 wt% was added to adjust pH of the solution to 1.8, to prepare a 1.8 mol/L phosphorus source solution.

(3) A mixture of the mixed salt solution, the phosphorus source solution, and a sodium persulfate solution (2.7 mol/L) was added to a reactor in parallel for a co-precipitation reaction. A reaction temperature was 70°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. n(oxidant)/[n1(Mn)+n1(Fe)+n1(M)]=1.5, and $K_1$=n1(P)/[n1(Mn)+n1(Fe)+n1(M)]=1

(4) After the reaction was completed, a reaction slurry was filtered and washed with pure water twice the volume of the slurry to obtain a filter cake. The filter cake was dried at 105°C for 3 hours to obtain a manganese iron phosphate precursor P4.

The manganese iron phosphate precursor P4 had a composition of $Mn_{0.748}Fe_{0.242}Ti_{0.01}P_{0.99}O_4 \cdot H_2O$, a median particle size $D_{50}$ of 2.12 $\mu$m, a tap density of 0.98 $g/cm^3$, and a specific surface area of 23.6 $m^2/g$. A ratio of manganese, iron, and titanium in the manganese iron phosphate precursor was n(Mn):n(Fe):n(Ti)=74.8:24.2:1, and a molar ratio K of a phosphorus content to a total metal content was measured, i.e., K=n(P)/[n(Mn)+n(Fe)+n(M)]=0.99.

(5) The above-mentioned prepared manganese iron phosphate precursor, lithium hydroxide, magnesium carbonate, and sucrose (based on C) according to a molar ratio of 1:1.03:0.01:0.6 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A4 was obtained after sieving.

The lithium manganese iron phosphate cathode material A4 had a composition of $Li_{1.03}Mn_{0.740}Fe_{0.240}Ti_{0.01}Mg_{0.01}PO_4/C$, a pellet density of 2.26 $g/cm^3$, a specific surface area of 18.4 $m^2/g$, and a carbon content of 1.94 wt%, and an average particle size of primary particles thereof was 80 nm.

**Example 5**

(1) A certain mass of manganese chloride, ferrous sulfate, and aluminum sulfate were weighed according to a molar ratio of n(Mn):n(Fe):n(Al)=70:29:1 and dissolved in deionized water, to prepare a 2 mol/L mixed salt solution.

(2) A certain mass of disodium hydrogen phosphate was weighed and dissolved in deionized water, and dilute nitric acid at a concentration of 50 wt% was added to adjust pH of the solution to 2, to prepare a 2 mol/L phosphorus source solution.

(3) A mixture of the mixed salt solution, the phosphorus source solution, and a sodium persulfate solution (1.5 mol/L) was added to a reactor in parallel for a co-precipitation reaction. A reaction temperature was 80°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. $n(oxidant)/[n1(Mn)+n1(Fe)+n1(M)]=0.75$, and $K_1=n1(P)/[n1(Mn)+n1(Fe)+n1(M)]=1$.

(4) After the reaction was completed, a reaction slurry was filtered and washed with pure water twice the volume of the slurry to obtain a filter cake. The filter cake was dried at 105°C for 3 hours to obtain a manganese iron phosphate precursor P5.

The manganese iron phosphate precursor P5 had a composition of $Mn_{0.703}Fe_{0.287}Al_{0.01}P_{0.99}O_4 \cdot H_2O$, a median particle size $D_{50}$ of 2.34 μm, a tap density of 1.26 g/cm$^3$, and a specific surface area of 18.8 m$^2$/g. A ratio of manganese, iron, and aluminum in the manganese iron phosphate precursor was $n(Mn):n(Fe):n(Al)=70.3:28.7:1$, and a molar ratio K of a phosphorus content to a total metal content was measured, i.e., $K=n(P)/[n(Mn)+n(Fe)+n(M)]=0.99$.

(5) The above-mentioned prepared manganese iron phosphate precursor, lithium hydroxide, niobium pentoxide, and cellulose according to a molar ratio of 1:1.03:0.005:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A5 was obtained after sieving.

The lithium manganese iron phosphate cathode material A5 had a composition of $Li_{1.03}Mn_{0.696}Fe_{0.284}Al_{0.01}Nb_{0.01}PO_4/C$, a pellet density of 2.15 g/cm$^3$, a specific surface area of 18.3 m$^2$/g, and a carbon content of 1.92 wt%, and an average particle size of primary particles thereof was 90 nm.

**Example 6**

(1) A certain mass of manganese chloride, ferrous sulfate, and zirconium nitrate were weighed according to a molar ratio of $n(Mn):n(Fe):n(Zr)=70:29:1$ and dissolved in deionized water, to prepare a 2 mol/L mixed salt solution.

(2) A certain mass of disodium hydrogen phosphate was weighed and dissolved in deionized water, and dilute nitric acid at a concentration of 50 wt% was added to adjust pH of the solution to 1.8, to prepare a 2.2 mol/L phosphorus source solution.

(3) A mixture of the mixed salt solution, the phosphorus source solution, and an ammonium persulfate solution (1.5 mol/L) was added to a reactor in parallel for a co-precipitation reaction. A reaction temperature was 75°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. $n(oxidant)/[n1(Mn)+n1(Fe)+n1(M)]=0.75$, and $K_1=n1(P)/[n1(Mn)+n1(Fe)+n1(M)]=1.1$.

(4) After the reaction was completed, a reaction slurry was filtered and washed with pure water twice the volume of the slurry to obtain a filter cake. The filter cake was dried at 105°C for 3 hours to obtain a manganese iron phosphate precursor P6.

The manganese iron phosphate precursor P6 had a composition of $Mn_{0.698}Fe_{0.292}Zr_{0.01}P_{1.02}O_4 \cdot H_2O$, a median particle size $D_{50}$ of 3.08 μm, a tap density of 1.18 g/cm$^3$, and a specific surface area of 20.6 m$^2$/g. A ratio of manganese, iron, and zirconium in the manganese iron phosphate precursor was $n(Mn):n(Fe):n(Zr)=69.8:29.2:1$, and a molar ratio K of a phosphorus content to a total metal content was measured, i.e., $K=n(P)/[n(Mn)+n(Fe)+n(M)]=1.02$.

(5) The above-mentioned prepared manganese iron phosphate precursor, lithium hydroxide, tungsten oxide, and sucrose (based on C) according to a molar ratio of 1:1.03:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A6 was obtained after sieving.

The lithium manganese iron phosphate cathode material A6 had a composition of $Li_{1.03}Mn_{0.691}Fe_{0.289}Zr_{0.01}W_{0.01}PO_4/C$, a pellet density of 2.23 g/cm$^3$, a specific surface area of 15.8 m$^2$/g, and a carbon content of 2.10 wt%, and an average particle size of primary particles thereof was 120 nm.

**Example 7**

(1) A certain mass of manganese sulfate, ferrous sulfate, and titanyl sulfate were weighed according to a molar ratio of n(Mn):n(Fe):n(Ti)=65:34:1 and dissolved in deionized water, to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.5 mol/L phosphorus source solution.

(3) A mixture of equal volumes of the mixed salt solution, the phosphorus source solution, and a sodium persulfate solution (2 mol/L) was added to a reactor in parallel for a co-precipitation reaction. A reaction temperature was 90°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. $n(oxidant)/[n1(Mn)+n1(Fe)+n1(M)]=1$, and $K_1=n1(P)/[n1(Mn)+n1(Fe)+n1(M)]=1.25$.

(4) After the reaction was completed, a reaction slurry was filtered and washed with pure water twice the volume of the slurry to obtain a filter cake. The filter cake was dried at 105°C for 3 hours to obtain a manganese iron phosphate precursor P7.

The manganese iron phosphate precursor P7 had a composition of $Mn_{0.649}Fe_{0.341}Ti_{0.01}P_{1.03}O_4 \cdot H_2O$, a median particle size $D_{50}$ of 2.15 $\mu m$, a tap density of 0.93 $g/cm^3$, and a specific surface area of 28.9 $m^2/g$. A ratio of manganese, iron, and titanium in the manganese iron phosphate precursor was n(Mn):n(Fe):n(Ti)=64.9:34.1:1, and a molar ratio K of a phosphorus content to a total metal content was measured, i.e., $K=n(P)/[n(Mn)+n(Fe)+n(M)]=1.03$.

(5) The above-mentioned prepared manganese iron phosphate precursor, lithium carbonate ($Li_2CO_3$), aluminum oxide, and glucose (based on C) according to a molar ratio of 1:0.52:0.005:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A7 was obtained after sieving.

The lithium manganese iron phosphate cathode material A7 had a composition of $Li_{1.04}Mn_{0.642}Fe_{0.338}Ti_{0.01}Al_{0.01}PO_4/C$, a pellet density of 2.10 $g/cm^3$, a specific surface area of 19.7 $m^2/g$, and a carbon content of 1.86 wt%, and an average particle size of primary particles thereof was 85 nm.

**Example 8**

(1) A certain mass of manganese sulfate, ferrous sulfate, and titanyl sulfate were weighed and dissolved in deionized water according to a molar ratio of n(Mn):n(Fe):n(Ti)=65:34:1 to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) A mixture of equal volumes of the mixed salt solution, the phosphorus source solution, and a sodium persulfate solution (2 mol/L) was added to a reactor in parallel for a co-precipitation reaction. A reaction temperature was 80°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. $n(oxidant)/[n1(Mn)+n1(Fe)+n1(M)]=1$, and $K_1=n1(P)/[n1(Mn)+n1(Fe)+n1(M)]=1.4$.

(4) After the reaction was completed, a reaction slurry was filtered and washed with pure water twice the volume of the slurry to obtain a filter cake. The filter cake was dried at 105°C for 3 hours to obtain a manganese iron phosphate precursor P8.

The manganese iron phosphate precursor P8 had a composition of $Mn_{0.651}Fe_{0.339}Ti_{0.01}P_{1.02}O_4 \cdot H_2O$, a median particle size $D_{50}$ of 2.87 $\mu m$, a tap density of 0.99 $g/cm^3$, and a specific surface area of 22.6 $m^2/g$. A ratio of manganese, iron, and titanium in the manganese iron phosphate precursor was n(Mn):n(Fe):n(Ti)=65.1:33.9: 1, and a molar ratio K of a phosphorus content to a total metal content was measured, i.e., $K=n(P)/[n(Mn)+n(Fe)+n(M)]=1.02$.

(5) The above-mentioned prepared manganese iron phosphate precursor, lithium carbonate ($Li_2CO_3$), zirconium oxide, and glucose (based on C) according to a molar ratio of 1:0.52:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A8 was obtained after sieving.

The lithium manganese iron phosphate cathode material A8 had a composition of $Li_{1.04}Mn_{0.644}Fe_{0.336}Ti_{0.01}Zr_{0.01}PO_4/C$, a pellet density of 2.21 $g/cm^3$, a specific surface area of 16.8 $m^2/g$, and a carbon content of 1.80 wt%, and an average particle size of primary particles thereof was 70 nm.

**Example 9**

(1) A certain mass of manganese sulfate and ferrous sulfate were weighed according to a molar ratio of n(Mn):n(Fe):n(Ti)=65:34:1 and dissolved in deionized water, to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) A mixture of equal volumes of the mixed salt solution, the phosphorus source solution, and a sodium persulfate solution (2 mol/L) was added to a reactor in parallel for a co-precipitation reaction. A reaction temperature was 90°C, a stirring speed was 500 r/min, and a reaction duration was 1 hour. Subsequently, an aging reaction was performed at an aging temperature of 90°C with a stirring speed of 500 r/min, and an aging reaction duration was 3 hours. $n(\text{oxidant})/[n1(\text{Mn})+n1(\text{Fe})+n1(\text{M})]=1$, and $K_1=n1(\text{P})/[n1(\text{Mn})+n1(\text{Fe})+n1(\text{M})]=1.4$.

(4) After the reaction was completed, a reaction slurry was filtered and washed with pure water twice the volume of the slurry to obtain a filter cake. The filter cake was dried at 105°C for 3 hours to obtain a manganese iron phosphate precursor P9.

The manganese iron phosphate precursor P9 had a composition of $Mn_{0.647}Fe_{0.343}Ti_{0.01}P_{1.04}O_4 \cdot H_2O$, a median particle size $D_{50}$ of 2.48 $\mu$m, a tap density of 0.97 g/cm$^3$, and a specific surface area of 26.2 m$^2$/g. A ratio of manganese, iron, and titanium in the manganese iron phosphate precursor was n(Mn):n(Fe):n(Ti)=64.7:34.3:1, and a molar ratio K of a phosphorus content to a total metal content was measured, i.e., K=n(P)/[n(Mn)+n(Fe)+n(M)]=1.04.

(5) The above-mentioned prepared manganese iron phosphate precursor, lithium carbonate ($Li_2CO_3$), and glucose (based on C) according to a molar ratio of 1:0.52:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A9 was obtained after sieving.

The lithium manganese iron phosphate cathode material A9 had a composition of $Li_{1.04}Mn_{0.647}Fe_{0.343}Ti_{0.01}PO_4/C$, a pellet density of 2.08 g/cm$^3$, a specific surface area of 18.8 m$^2$/g, and a carbon content of 1.78 wt%, and an average particle size of primary particles thereof was 90 nm.

**Example 10**

(1) A certain mass of manganese sulfate and ferrous sulfate were weighed according to a molar ratio of n(Mn):n(Fe) =65:35 and dissolved in deionized water, to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) A mixture of the mixed salt solution, the phosphorus source solution, and a sodium persulfate solution (2 mol/L) was added to a reactor in parallel for a co-precipitation reaction. A reaction temperature was 90°C, and a stirring speed was 500 r/min. A liquid addition was completed in 3 hours. After the liquid addition was complete, an aging reaction was performed at an aging temperature of 90°C with a stirring speed of 500r/min, and an aging reaction duration was 3 hours. $n(\text{oxidant})/[n1(\text{Mn})+n1(\text{Fe})]=1$, and $K_1=n1(\text{P})/[n1(\text{Mn})+n1(\text{Fe})]=1.4$.

(4) After the reaction was completed, a reaction slurry was filtered and washed with pure water twice the volume of the slurry to obtain a filter cake. The filter cake was dried at 105°C for 3 hours to obtain a manganese iron phosphate precursor P10.

The manganese iron phosphate precursor P10 had a composition of $Mn_{0.650}Fe_{0.348}P_{1.04}O_4 \cdot H_2O$, a median particle size $D_{50}$ of 4.88 $\mu$m, a tap density of 0.86 g/cm$^3$, and a specific surface area of 23.2 m$^2$/g. A ratio of manganese and iron in the manganese iron phosphate precursor was n(Mn):n(Fe)= 65.2:34.8, and a molar ratio K of a phosphorus content to a total metal content was measured, i.e., K=n(P)/[n(Mn)+n(Fe)]=1.04.

(5) The above-mentioned prepared manganese iron phosphate precursor, lithium carbonate, magnesium carbonate, and glucose (based on C) according to a molar ratio of 1:0.52:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material A10 was obtained after sieving.

The lithium manganese iron phosphate cathode material A10 had a composition of $Li_{1.04}Mn_{0.645}Fe_{0.345}Mg_{0.01}PO_4/C$, a pellet density of 2.05 $g/cm^3$, a specific surface area of 24.8 $m^2/g$, and a carbon content of 1.86 wt%, and an average particle size of primary particles thereof was 250 nm.

**Comparative Example 1**

(1) A certain mass of manganese sulfate, ferrous sulfate, and titanyl sulfate were weighed and dissolved in deionized water according to a molar ratio of n(Mn):n(Fe):n(Ti)=65:34:1 to prepare a 2 mol/L mixed salt solution.

(2) A certain mass of sodium dihydrogen phosphate was weighed and dissolved in deionized water to prepare a 2.8 mol/L phosphorus source solution.

(3) Equal volumes of the mixed salt solution, the phosphorus source solution, and a sodium persulfate solution (2 mol/L) was mixed, dilute sulfuric acid at a concentration of 30 wt% was added to adjust pH of the solution to 2, and the mixed solution was directly added to a reactor for a co-precipitation reaction. A reaction temperature was 90°C, a stirring speed was 500 r/min, and a reaction duration was 1 hour. Subsequently, an aging reaction was performed at an aging temperature of 90°C with a stirring speed of 500r/min, and an aging reaction duration was 3 hours. n(oxidant)/[n1(Mn)+n1(Fe)+n1(M)]=1, and $K_1$=n1(P)/[n1(Mn)+n1(Fe)+n1(M)]=1.4.

(4) After the reaction was completed, a reaction slurry was filtered and washed with pure water twice the volume of the slurry to obtain a filter cake. The filter cake was dried at 105°C for 3 hours to obtain a manganese iron phosphate precursor DP1.

The manganese iron phosphate precursor DP1 had a composition of $Mn_{0.602}Fe_{0.388}Ti_{0.01}P_{0.95}O_4 \cdot H_2O$, a median particle size $D_{50}$ of 3.85 $\mu m$, a tap density of 0.88 $g/cm^3$, and a specific surface area of 61.5 $m^2/g$. A ratio of manganese, iron, and titanium in the manganese iron phosphate precursor was n(Mn):n(Fe):n(Ti)=60.2:38.8:1, and a molar ratio K of a phosphorus content to a total metal content was measured, i.e., K=n(P)/[n(Mn)+n(Fe)+n(M)]=0.95.

(5) The above-mentioned prepared manganese iron phosphate precursor, lithium carbonate, magnesium carbonate, and glucose (based on C) according to a molar ratio of 1:0.52:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material D1 was obtained after sieving.

The lithium manganese iron phosphate cathode material D1 had a composition of $Li_{1.04}Mn_{0.596}Fe_{0.384}Ti_{0.01}Mg_{0.01}PO_4/C$, a pellet density of 1.85 $g/cm^3$, a specific surface area of 36.5 $m^2/g$, and a carbon content of 1.75 wt%, and an average particle size of primary particles thereof was 1,000 nm.

**Comparative Example 2**

(1) A certain mass of manganese sulfate, ferrous sulfate, and titanyl sulfate were weighed according to a molar ratio of n(Mn):n(Fe):n(Ti)=65:34:1 and dissolved in deionized water, to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) Equal volumes of the mixed salt solution and the phosphorus source solution were mixed, and the mixed solution was directly added into a reactor, heated, and stirred. A reaction temperature was 90°C, and a stirring speed was 500 r/min. Then, the same volume of sodium persulfate solution (2 mol/L) was added to the mixed solution. A liquid addition was completed in 3 hours. After the liquid addition was complete, an aging reaction was performed at an aging temperature of 90°C with a stirring speed of 500r/min, and an aging reaction duration was 3 hours. n(oxidant)/[n1(Mn)+n1(Fe)+n1(M)]=1, and $K_1$=n1(P)/[n1(Mn)+n1(Fe)+n1(M)]=1.4.

(4) After the reaction was completed, a reaction slurry was filtered and washed with pure water twice the volume of the slurry to obtain a filter cake. The filter cake was dried at 105°C for 3 hours to obtain a manganese iron phosphate precursor DP2.

The manganese iron phosphate precursor DP2 had a composition of $Mn_{0.613}Fe_{0.377}Ti_{0.01}P_{0.92}O_4 \cdot H_2O$, a median particle size $D_{50}$ of 3.65 $\mu$m, a tap density of 0.68 $g/cm^3$, and a specific surface area of 52.5 $m^2/g$. A ratio of manganese, iron, and titanium in the manganese iron phosphate precursor was n(Mn):n(Fe):n(Ti)=61.3:37.7:1, and a molar ratio K of a phosphorus content to a total metal content was measured, i.e., K=n(P)/[n(Mn)+n(Fe)+n(M)]=0.92.

(5) The above-mentioned prepared manganese iron phosphate precursor, lithium carbonate, magnesium carbonate, and glucose (based on C) according to a molar ratio of 1:0.52:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material D2 was obtained after sieving.

The lithium manganese iron phosphate cathode material D2 had a composition of $Li_{1.04}Mn_{0.607}Fe_{0.373}Ti_{0.01}Mg_{0.01}PO_4/C$, a pellet density of 1.77 $g/cm^3$, a specific surface area of 32.5 $m^2/g$, and a carbon content of 1.18 wt%, and an average particle size of primary particles thereof was 600 nm.

## Comparative Example 3

(1) A certain mass of manganese sulfate, ferrous sulfate, and titanyl sulfate were weighed and dissolved in deionized water according to a molar ratio of n(Mn):n(Fe):n(Ti)=65:34:1 to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) A mixture of equal volumes of the mixed salt solution and the phosphorus source solution was added to a reactor in parallel. A reaction temperature was 90°C, and a stirring speed was 500 r/min. An alkali solution was added to adjust pH of the solution. A liquid addition was completed in 3 hours. After the liquid addition was complete, an aging reaction was performed at an aging temperature of 90°C with a stirring speed of 500r/min, and an aging reaction duration was 3 hours. $K_1$=n1(P)/[n1(Mn)+n1(Fe)+n1(M)]=1.4.

(4) After the reaction was completed, a reaction slurry was filtered and washed with pure water twice the volume of the slurry to obtain a filter cake. The filter cake was dried at 105°C for 3 hours to obtain a manganese iron phosphate precursor DP3.

The manganese iron phosphate precursor DP3 had a composition of $(Mn_{0.621}Fe_{0.369}Ti_{0.01})_3(PO_4)_2 \cdot H_2O$, a median particle size $D_{50}$ of 16.85 $\mu$m, a tap density of 0.34 $g/cm^3$, and a specific surface area of 23.5 $m^2/g$. A ratio of manganese, iron, and titanium in the manganese iron phosphate precursor was n(Mn):n(Fe):n(Ti)=62.1:36.9:1, and a molar ratio K of a phosphorus content to a total metal content was measured, i.e., K=n(P)/[n(Mn)+n(Fe)+n(M)]=0.67.

(5) The above-mentioned prepared manganese iron phosphate precursor, lithium carbonate, lithium dihydrogen phosphate, magnesium carbonate, and glucose according to a molar ratio of 1:0.02:1:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material D3 was obtained after sieving.

The lithium manganese iron phosphate cathode material D3 had a composition of $Li_{1.04}Mn_{0.615}Fe_{0.365}Ti_{0.01}Mg_{0.01}PO_4/C$, a pellet density of 1.36 $g/cm^3$, a specific surface area of 12.8 $m^2/g$, and a carbon content of 1.32 wt%, and an average particle size of primary particles thereof was 1.2 $\mu$m.

## Comparative Example 4

(1) A certain mass of ferrous sulfate was weighed and dissolved in deionized water to prepare a 2 mol/L mixed salt solution.

(2) A certain mass of sodium dihydrogen phosphate was weighed and dissolved in deionized water, and dilute sulfuric acid at a concentration of 30 wt% was added to adjust pH of the solution to 2, to prepare a 2.8 mol/L phosphorus source solution.

(3) 1L of the mixed salt solution, 1L of the phosphorus source solution, and 1L of sodium persulfate solution (2 mol/L) were added to a 5L reactor in parallel for a co-precipitation reaction. A reaction temperature was 90°C, and a stirring speed was 500 r/min. A liquid addition was completed in 1 hour. After the liquid addition was complete, an aging reaction was performed at an aging temperature of 90°C with a stirring speed of 500r/min, and an aging reaction duration was 3 hours. n(oxidant)/n1(Fe)=1, and $K_1$=n1(P)/n1(Fe)=1.4.

(4) After the reaction was completed, a reaction slurry was filtered and washed with pure water twice the volume of the slurry to obtain a filter cake. The filter cake was dried at 105°C for 3 hours to obtain a precursor of iron phosphate DP4. The precursor of iron phosphate DP4 had a composition of $FePO_4 \cdot 2H_2O$, a median particle size $D_{50}$ of 3.78 μm, a tap density of 0.78 g/cm$^3$, and a specific surface area of 42.3 m$^2$/g. A molar ratio K of a phosphorus content to a total metal content was measured, i.e., K=n(P)/n(Fe)=1.

(5) The above-mentioned prepared precursor of iron phosphate, manganese tetraoxide, lithium carbonate, titanium dioxide, and glucose (based on C) according to a molar ratio of 1:0.62:0.52:0.01:0.7 were mixed with pure water. The mixture was mixed evenly by mechanical stirring to obtain a slurry.

(6) The slurry was evaporated to dryness in a heating furnace tray, and then placed in a vacuum oven at 85°C to dry for 4 hours to obtain a dry material. The dry material was calcined at 650°C for 10 hours under a nitrogen atmosphere, and a lithium manganese iron phosphate cathode material D4 was obtained after sieving.

The lithium manganese iron phosphate cathode material D4 had a composition of $Li_{1.04}Mn_{0.643}Fe_{0.347}Ti_{0.01}PO_4$/C, a pellet density of 1.65 g/cm$^3$, a specific surface area of 32.8 m$^2$/g, and a carbon content of 2.46 wt%, and an average particle size of primary particles thereof was 600 nm.

Any two positions of the above-mentioned prepared manganese iron phosphate precursor were randomly selected, and the actual molar content ratio m' of metal Mn and metal Fe at each position was tested using EDS, respectively. The tested values were shown in Table 1. The theoretical molar content ratio of metal Mn and metal Fe in the manganese iron phosphate precursor was represented by m.

[Table 1]

|  | Theoretical value $m_{01}$ | Measured value $m_1$' | $\Delta mp_1$ | Theoretical value $m_{02}$ | Measured value $m_2$' | $\Delta mp_2$ |
|---|---|---|---|---|---|---|
| Example 1 | 1.912 | 1.862 | 2.60% | 1.912 | 1.889 | 1.19% |
| Example 2 | 1.912 | 1.908 | 0.20% | 1.912 | 1.934 | 1.16% |
| Example 3 | 1.912 | 1.902 | 0.51% | 1.912 | 1.878 | 1.77% |
| Example 4 | 3.125 | 3.005 | 1.60% | 3.125 | 3.102 | 0.74% |
| Example 5 | 2.414 | 2.454 | 1.67% | 2.414 | 2.438 | 1.00% |
| Example 6 | 2.414 | 2.448 | 1.41% | 2.414 | 2.396 | 0.75% |
| Example 7 | 1.912 | 1.890 | 1.12% | 1.912 | 1.895 | 0.88% |
| Example 8 | 1.912 | 1.931 | 0.98% | 1.912 | 1.936 | 1.28% |
| Example 9 | 1.912 | 1.932 | 1.03% | 1.912 | 1.883 | 1.516% |
| Example 10 | 1.857 | 1.866 | 0.48% | 1.857 | 1.876 | 1.01% |
| Comparative Example 1 | 1.912 | 1.448 | 24.26% | 1.912 | 1.656 | 13.38% |
| Comparative Example 2 | 1.912 | 1.336 | 30.11% | 1.912 | 1.998 | 4.51% |
| Comparative Example 3 | 1.912 | 1.829 | 4.34% | 1.912 | 1.968 | 2.93% |

The molar ratios of Mn to Fe at different positions in the precursor in Comparative Example 1 to Comparative Example 2 are significantly different from the theoretical values, and the ratios at different positions also differ significantly. The reason may be in that, compared with the preparation process of the precursor in Example 1, in the preparation process of the precursor in Comparative Example 1, the mixed salt solution, the phosphorus source solution, and the oxidant were mixed, and then the pH was adjusted. Such a method that the raw materials were mixed in one step may lead to uneven reaction and easy segregation of manganese and iron. In Comparative Example 2, the mixed salt solution and the phosphorus source solution were mixed and reacted, and then the oxidant was added, resulting in part of the metal and phosphorus reacting to form a precipitate, thereby failing to achieve complete oxidation and affecting the even distribution of manganese and iron. In Comparative Example 3, no oxidant was added at all, and thus ferromanganese phosphate was formed, in which the metal content and the phosphorus content have a large deviation.

The median particle size $D_{50}$, tap density, and specific surface area of the manganese iron phosphate precursor prepared in the examples and comparative examples were tested, and the results were shown in Table 2.

[Table 2]

|  | Median particle size $D_{50}$ (μm) | Tap density (g/cm$^3$) | Specific surface area (m$^2$/g) |
|---|---|---|---|
| Example 1 | 2.36 | 0.96 | 26.6 |
| Example 2 | 1.65 | 1.14 | 26.5 |
| Example 3 | 3.78 | 1.02 | 22.1 |
| Example 4 | 2.12 | 0.98 | 23.6 |
| Example 5 | 2.34 | 1.26 | 18.8 |
| Example 6 | 3.08 | 1.18 | 20.6 |
| Example 7 | 2.15 | 0.93 | 28.9 |
| Example 8 | 2.87 | 0.99 | 22.6 |
| Example 9 | 2.48 | 0.97 | 26.2 |
| Example 10 | 4.88 | 0.86 | 23.2 |
| Comparative Example 1 | 3.85 | 0.88 | 61.5 |
| Comparative Example 2 | 3.65 | 0.68 | 52.5 |
| Comparative Example 3 | 16.85 | 0.34 | 23.5 |
| Comparative Example 4 | 3.78 | 0.78 | 42.3 |

The compositions of the manganese iron phosphate precursor and the lithium manganese iron phosphate cathode material prepared in the examples and comparative examples were shown in Table 3.

[Table 3]

|  | Precursor | Positive electrode material |
|---|---|---|
| Example 1 | $Mn_{0.648}Fe_{0.342}Ti_{0.01}P_{1.04}O_4 \cdot H_2O$ | $Li_{1.04}Mn_{0.642}Fe_{0.339}Ti_{0.01}Mg_{0.01}PO_4/C$ |
| Example 2 | $Mn_{0.652}Fe_{0.338}Ti_{0.01}P_{1.09}O_4 \cdot H_2O$ | $Li_{1.03}Mn_{0.645}Fe_{0.335}Ti_{0.01}Mg_{0.01}PO_4/C$ |
| Example 3 | $Mn_{0.647}Fe_{0.343}Ti_{0.01}P_{1.02}O_4 \cdot H_2O$ | $Li_{1.03}Mn_{0.640}Fe_{0.340}Ti_{0.01}Mg_{0.01}PO_4/C$ |
| Example 4 | $Mn_{0.748}Fe_{0.242}Ti_{0.01}P_{0.99}O_4 \cdot H_2O$ | $Li_{1.03}Mn_{0.740}Fe_{0.240}Ti_{0.01}Mg_{0.01}PO_4/C$ |
| Example 5 | $Mn_{0.703}Fe_{0.287}Al_{0.01}P_{0.99}O_4 \cdot H_2O$ | $Li_{1.03}Mn_{0.696}Fe_{0.284}Al_{0.01}Nb_{0.01}PO_4/C$ |
| Example 6 | $Mn_{0.698}Fe_{0.292}Zr_{0.01}P_{1.02}O_4 \cdot H_2O$ | $Li_{1.03}Mn_{0.691}Fe_{0.289}Zr_{0.01}W_{0.01}PO_4/C$ |
| Example 7 | $Mn_{0.649}Fe_{0.341}Ti_{0.01}P_{1.03}O_4 \cdot H_2O$ | $Li_{1.04}Mn_{0.642}Fe_{0.338}Ti_{0.01}Al_{0.01}PO_4/C$ |
| Example 8 | $Mn_{0.651}Fe_{0.339}Ti_{0.01}P_{1.02}O_4 \cdot H_2O$ | $Li_{1.04}Mn_{0.644}Fe_{0.336}Ti_{0.01}Zr_{0.01}PO_4/C$ |
| Example 9 | $Mn_{0.647}Fe_{0.343}Ti_{0.01}P_{1.04}O_4 \cdot H_2O$ | $Li_{1.04}Mn_{0.647}Fe_{0.343}Ti_{0.01}PO_4/C$ |
| Example 10 | $Mn_{0.650}Fe_{0.348}P_{1.04}O_4 \cdot H_2O$ | $Li_{1.04}Mn_{0.645}Fe_{0.345}Mg_{0.01}PO_4/C$ |
| Comparative Example 1 | $Mn_{0.602}Fe_{0.388}Ti_{0.01}P_{0.95}O_4 \cdot H_2O$ | $Li_{1.04}Mn_{0.596}Fe_{0.384}Ti_{0.01}Mg_{0.01}PO_4/C$ |
| Comparative Example 2 | $Mn_{0.613}Fe_{0.377}Ti_{0.01}P_{0.92}O_4 \cdot H_2O$ | $Li_{1.04}Mn_{0.607}Fe_{0.373}Ti_{0.01}Mg_{0.01}PO_4/C$ |
| Comparative Example 3 | $(Mn_{0.621}Fe_{0.369}Ti_{0.01})_3(PO_4)_2 \cdot H_2O$ | $Li_{1.04}Mn_{0.615}Fe_{0.365}Ti_{0.01}Mg_{0.01}PO_4/C$ |
| Comparative Example 4 | $FePO_4 \cdot 2H_2O$ | $Li_{1.04}Mn_{0.643}Fe_{0.347}Ti_{0.01}PO_4/C$ |

Any two positions of the above-mentioned prepared lithium manganese iron phosphate cathode material were randomly selected, and the actual molar content ratio m" of metal Mn and metal Fe at each position was tested using EDS, respectively. The tested values were shown in Table 4. The theoretical molar content ratio of metal Mn and metal Fe in the lithium manganese iron phosphate cathode material was represented by m.

[Table 4]

| | Theoretical value $m_1$ | Measured value $m_1''$ | $\Delta mc_1$ | Theoretical value $m_2$ | Measured value $m_2''$ | $\Delta mc_2$ |
|---|---|---|---|---|---|---|
| Example 1 | 1.912 | 1.942 | 1.58% | 1.912 | 1.944 | 1.69% |
| Example 2 | 1.912 | 1.887 | 1.30% | 1.912 | 1.948 | 1.89% |
| Example 3 | 1.912 | 1.929 | 0.87% | 1.912 | 1.937 | 1.32% |
| Example 4 | 3.125 | 3.169 | 1.42% | 3.125 | 3.114 | 0.34% |
| Example 5 | 2.414 | 2.459 | 1.88% | 2.414 | 2.401 | 0.55% |
| Example 6 | 2.414 | 2.376 | 1.58% | 2.414 | 2.435 | 0.85% |
| Example 7 | 1.912 | 1.933 | 1.08% | 1.912 | 1.894 | 0.96% |
| Example 8 | 1.912 | 1.884 | 1.44% | 1.912 | 1.945 | 1.74% |
| Example 9 | 1.912 | 1.929 | 0.90% | 1.912 | 1.891 | 1.12% |
| Example 10 | 1.857 | 1.876 | 1.02% | 1.857 | 1.828 | 1.58% |
| Comparative Example 1 | 1.912 | 1.464 | 23.42% | 1.912 | 1.556 | 18.60% |
| Comparative Example 2 | 1.912 | 1.375 | 28.11% | 1.912 | 2.381 | 24.51% |
| Comparative Example 3 | 1.912 | 1.982 | 3.66% | 1.912 | 1.835 | 4.03% |
| Comparative Example 4 | 1.912 | 2.021 | 5.68% | 1.912 | 1.746 | 8.67% |

The average particle size of the primary particles, pellet density, specific surface area, carbon content, and volume resistivity of the lithium manganese iron phosphate cathode material prepared in the examples and comparative examples were tested, and the results were shown in Table 5.

[Table 5]

| | Average particle size of primary particles nm | Pellet density g/cm$^3$ | Specific surface area m$^2$/g | Content of carbon wt% | Volume resistivity $\Omega \cdot cm$ |
|---|---|---|---|---|---|
| Example 1 | 80 | 2.15 | 18.6 | 1.84 | 50 |
| Example 2 | 60 | 2.2 | 21.2 | 2.09 | 80 |
| Example 3 | 80 | 2.19 | 18.3 | 2.31 | 152 |
| Example 4 | 80 | 2.26 | 18.4 | 1.94 | 129 |
| Example 5 | 90 | 2.15 | 18.3 | 1.92 | 269 |
| Example 6 | 120 | 2.23 | 15.8 | 2.1 | 32 |
| Example 7 | 85 | 2.10 | 19.7 | 1.86 | 47 |
| Example 8 | 70 | 2.21 | 16.8 | 1.80 | 66 |
| Example 9 | 90 | 2.10 | 16.8 | 1.98 | 216 |
| Example 10 | 85 | 2.05 | 17.6 | 1.86 | 198 |
| Comparative Example 1 | 1,000 | 1.85 | 36.5 | 1.25 | 1212 |
| Comparative Example 2 | 600 | 1.77 | 32.5 | 1.18 | 1562 |
| Comparative Example 3 | 1200 | 1.36 | 12.8 | 1.32 | 5832 |
| Comparative Example 4 | 600 | 1.65 | 32.8 | 2.46 | 3397 |

It can be seen from Table 1 to Table 5 that, compared with Comparative Example 1 to Comparative Example 4, the molar ratios of Mn and Fe at different positions in the cathode material and the precursor thereof in Example 1 to Example 10 are slightly different from the theoretical values, indicating that the iron and manganese are evenly distributed in the cathode material and the precursor thereof, and there is no segregation phenomenon. The cathode materials prepared thereby have low volume resistivity and small primary particles. The cathode materials, when used in the lithium-ion batteries, can significantly improve the electrochemical performances of the lithium-ion batteries.

Specifically, since the molar ratios of Mn and Fe at different positions in the precursor of the cathode material in Comparative Example 1 to Comparative Example 2 are significantly different from the theoretical values, the molar ratios of Mn and Fe at different positions in the cathode materials in Comparative Example 1 to Comparative Example 2 are significantly different from the theoretical values, and the ratios at different positions are also significantly different. At the same time, due to the segregation and uneven distribution of manganese and iron in the precursor in Comparative Example 1 and the incomplete oxidation reaction and the presence of impurities of the precursor in Comparative Example 2, the cathode materials in Comparative Example 1 to Comparative Example 2 have relatively greater primary particles and volume resistivity. In Comparative Example 3, there is a need to supplement the phosphorus source during the preparation of the cathode material, which may cause a ratio distribution of the metal and phosphorus to be uneven and difficult to control, and thus the cathode material may have a relatively great volume resistivity. In Comparative Example 4, iron phosphate and manganese tetraoxide are mixed, but elements cannot be mixed at the atomic level, and the molar ratio of Mn to Fe also has a great deviation.

**Test Example**

This test example was used to describe an electrode material, an electrode, a lithium-ion battery, and a preparation method thereof.

(1) Preparation of a positive electrode plate: The lithium manganese iron phosphate positive electrode material prepared in the above-mentioned examples and comparative examples, a conductive agent carbon nanotube, and a binder NMP in PVDF solution were mixed according to a mass ratio of 90:5:5. Specifically, the dried cathode material and the conductive agent were ground in a mortar for 15 minutes, PVDF solution (mass fraction 5%) was added in proportion after grinding evenly, and the mixture was stirred on a magnetic stirrer for 6 hours; the obtained paste slurry was evenly coated on a current collector aluminum foil; then the slurry was dried in a vacuum drying oven at 60°C for 20 hours; and the coated aluminum foil was punched using a pressure of 100MPa to form a positive electrode plate with a diameter of 12mm and a thickness of 120μm. The positive electrode plate was placed in a vacuum drying oven at 120°C to dry for 12 hours.

(2) Assembly of battery: a lithium metal plate with a diameter of 17 mm and a thickness of 1 mm was used as a negative electrode; a polyethylene porous membrane coated with an aluminum oxide ceramic layer and with a thickness of 25 μm was used as a separator; and a mixture of equal amounts of 1 mol/L $LiPF_6$, ethylene carbonate (EC), and diethyl carbonate (DEC) was used as an electrolyte. The positive electrode plate, the separator, the negative electrode plate, and the electrolyte were assembled into a 2025-type button battery in an Ar glove box with a water content and an oxygen content of smaller than 5 ppm.

(3) Electrochemical performance test: The battery was subjected to a charged and discharged test using a LAND CT2001A charge and discharge instrument (Wuhan Rambo Electronics Co., Ltd). The charge and discharge voltage ranged from 2.5V to 4.4 V. The assembled lithium-ion battery was subjected to a specific capacity test at a rate of 0.1C and 1C, respectively, and subjected to a cycle stability test at a rate of 1C. The test results were shown in Table 6.

[Table 6]

| | 0.1C discharge specific capacity mAh/g | 1C discharge specific capacity mAh/g | Retention rate for 80 cycles (45°C)% |
|---|---|---|---|
| Example 1 | 155.2 | 144.6 | 96.8 |
| Example 2 | 154.3 | 143.3 | 95.9 |
| Example 3 | 154.9 | 143.8 | 95.5 |
| Example 4 | 153.6 | 142.6 | 94.9 |
| Example 5 | 152.7 | 141.1 | 97.5 |
| Example 6 | 154.6 | 143.6 | 95.8 |
| Example 7 | 154.2 | 143.8 | 97.4 |
| Example 8 | 155 | 144.3 | 96.5 |
| Example 9 | 151.6 | 140 | 92.6 |

(continued)

|  | 0.1C discharge specific capacity mAh/g | 1C discharge specific capacity mAh/g | Retention rate for 80 cycles (45°C)% |
|---|---|---|---|
| Example 10 | 152 | 140.1 | 93 |
| Comparative Example 1 | 144.4 | 132 | 90.2 |
| Comparative Example 2 | 145.2 | 133.2 | 90.6 |
| Comparative Example 3 | 138.2 | 122.5 | 88.6 |
| Comparative Example 4 | 144.6 | 132.4 | 90.3 |

It can be seen from Table 6 that the cathode material prepared in the present disclosure has good capacity performance, rate performance, and cycle stability. The reason is in that, in the precursor prepared in the present disclosure, manganese and iron are evenly distributed, and the ratio of metal to phosphorus are adjustable; and doping of the precursor improves the uniformity of the doping elements. The cathode material prepared by using the precursor of the present disclosure as raw material has the characteristics of small primary particles, even carbon coating, and low volume resistivity, which is conducive to lithium intercalation and lithium deintercalation, thereby allowing the cathode material to have a 0.1C discharge specific capacity of greater than 150 mAh/g and a 1C discharge specific capacity of greater than 140 mAh/g. Dual doping of the precursor and the cathode material ensures that the cathode material has a 80-week cycle retention rate of greater than 95%.

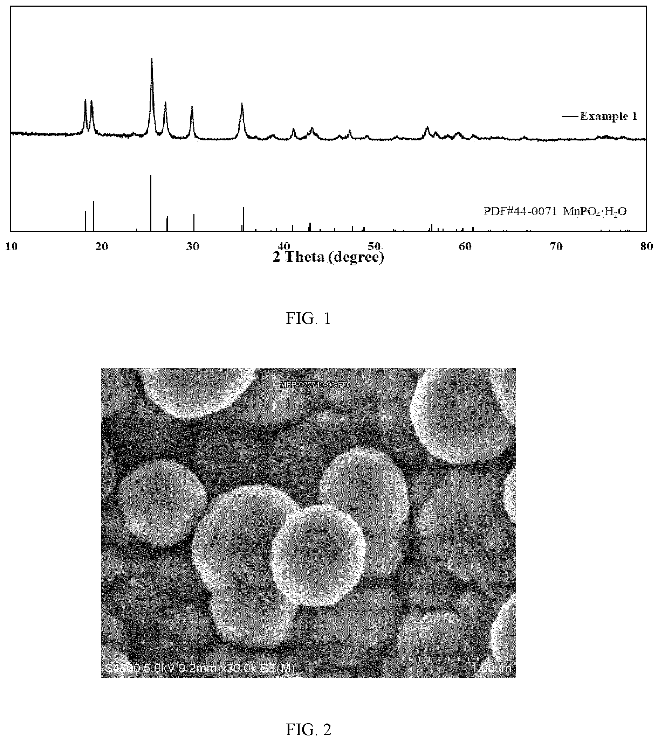

FIG. 1 is an XRD spectrum of the manganese iron phosphate precursor prepared in Example 1. It can be seen from FIG. 1 that the XRD of the manganese iron phosphate precursor prepared in the present disclosure is completely consistent with the $MnPO_4 \cdot H_2O$ standard card, indicating that the phase separation and the generation of other impurities do not occur.

FIG. 2 is an SEM image of the manganese iron phosphate precursor prepared in Example 1. It can be seen from FIG. 2 that the primary particles of the manganese iron phosphate precursor prepared in the present disclosure are relatively small. When the manganese iron phosphate precursor is used to prepare the lithium manganese iron phosphate cathode material, the lithium source and the carbon source can be advantageously and evenly mixed, and the carbon source can be evenly coated on the surface of the cathode material.

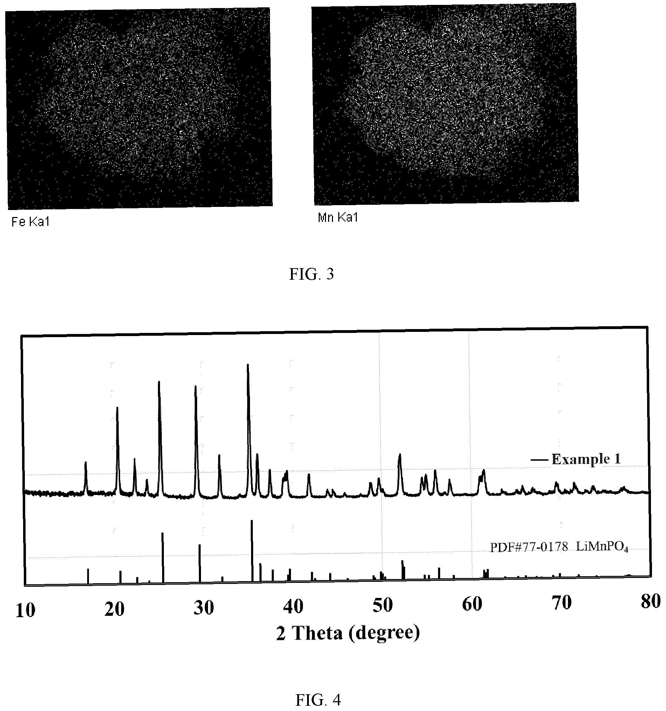

FIG. 3 is an EDS distribution image of Mn and Fe elements in a cross-section of the manganese iron phosphate precursor prepared in Example 1. It can be seen from FIG. 3 that the manganese and iron in the manganese iron phosphate precursor prepared in the present disclosure are evenly distributed.

FIG. 4 is an XRD spectrum of the lithium manganese iron phosphate cathode material prepared in Example 1. It can be seen from FIG. 4 that the XRD of the lithium manganese iron phosphate cathode material prepared in the present disclosure corresponds to the standard spectrum, manganese and iron does not form a phase separation, and no other impurities are generated.

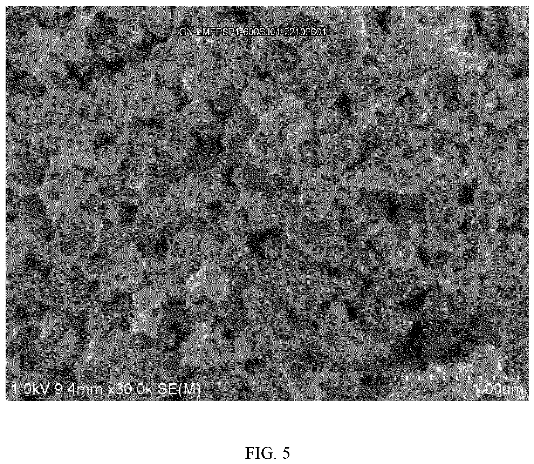

FIG. 5 is an SEM image of the lithium manganese iron phosphate cathode material prepared in Example 1. It can be seen from FIG. 5 that the primary particles of the lithium manganese iron phosphate cathode material are small and even, and there is no carbon agglomeration on the surface, indicating that the carbon is evenly coated on the surface of the cathode material.

The preferred embodiments of the present disclosure are described in detail above. However, the present disclosure is not limited thereto. Within the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them fall within the scope of protection of the present disclosure.

## Claims

1. A lithium manganese iron phosphate cathode material, wherein:
   the cathode material has a composition represented by Formula I:

   $Li_dMn_{1-a-b-c}Fe_aR_bPO_4/C$, Formula I, where: $0.1 \leq a \leq 0.5$, $0 < b < 0.08$, $0.9 < d < 1.2$, and R is selected from at least one of Al, Mg, Ca, Sr, V, Cr, Y, Mo, Nb, B, Al, W, La, Sm, Co, Ni, Cu, Zn, Zr, and Ti;
   the cathode material has a volume resistivity ranging from 10 $\Omega \cdot$cm to $10^4$ $\Omega \cdot$cm; and
   an actual molar content ratio m" of element Mn to element Fe at any position in the cathode material and a theoretical molar content ratio m of element Mn to element Fe at any position in the cathode material satisfy the

following relationship:

$$\Delta m_c = |m''-m|/m \leq 5\%.$$

2. The lithium manganese iron phosphate cathode material according to claim 1, wherein:

0.15<a<0.45, 0<b<0.06, and 0.95<d<1.15;
preferably, R is selected from at least one of Al, Co, Ni, Mg, Al, W, Nb, Zr, and Ti;
preferably, the cathode material has a volume resistivity ranging from 10 $\Omega\cdot$cm to $10^3$ $\Omega\cdot$cm, and further preferably, the cathode material has a volume resistivity ranging from 10 $\Omega\cdot$cm to 500 $\Omega\cdot$cm; and
preferably, based on a total weight of the lithium manganese iron phosphate cathode material, a content of carbon ranges from 0.5 wt% to 5 wt%, and preferably, from 1 wt% to 3 wt%.

3. The lithium manganese iron phosphate cathode material according to claim 1 or 2, wherein $\Delta m_c = |m''-m|/m \leq 3\%$.

4. The lithium manganese iron phosphate cathode material according to any one of claims 1 to 3, wherein:

the cathode material has a pellet density ranging from 1.5 g/cm$^3$ to 3.5 g/cm$^3$, and preferably, from 2 g/cm$^3$ to 3 g/cm$^3$;
preferably, the cathode material has a specific surface area ranging from 10 m$^2$/g to 60 m$^2$/g, and preferably, from 10 m$^2$/g to 25 m$^2$/g;
preferably, the lithium manganese iron phosphate cathode material has a secondary particle structure formed by primary particles;
preferably, the cathode material has an average particle size ranging from 1 $\mu$m to 50 $\mu$m, and preferably, from 7 $\mu$m to 15 $\mu$m; and
preferably, the primary particles have an average particle size ranging from 10 nm to 500 nm, and preferably, from 10 nm to 200 nm.

5. A preparation method of a lithium manganese iron phosphate cathode material, comprising:

S1, mixing a manganese source, an iron source, and an R1 source with water, to obtain a mixed salt solution;
S2, mixing a phosphorus source with water, and adding a pH adjuster, to obtain a phosphorus source solution;
S3, adding the mixed salt solution, the phosphorus source solution, and an oxidant into a reactor in parallel, performing a coprecipitation reaction, filtering, washing, and drying, to obtain a manganese iron phosphate precursor;
S4, mixing the manganese iron phosphate precursor, a lithium source, a carbon source, and an R2 source, to obtain a mixed material; and
S5, calcining the mixed material under a protective atmosphere, to obtain the lithium manganese iron phosphate cathode material, wherein:
preferably, the manganese iron phosphate precursor has a composition represented by Formula II:

$Mn_{1-x-y}Fe_xR1_yP_zO_4 \cdot nH_2O$, Formula II, where $0.1 \leq x \leq 0.5$, $0 \leq y \leq 0.04$, $0.95 < z < 1.10$, $0.95 \leq n \leq 1.5$, and R1 is selected from at least one of Al, Mg, Ca, Sr, V, Cr, Y, Mo, Nb, B, Al, W, La, Sm, Co, Ni, Cu, Zn, Zr, and Ti; and
preferably, the lithium manganese iron phosphate cathode material has a composition represented by Formula I:

$Li_dMn_{1-a-b-c}Fe_aR_bPO_4PO_4/C$, Formula I, where $0.1 \leq a \leq 0.5$, $0 < b < 0.08$, $0.9 < d < 1.2$, and R is selected from at least one of Al, Mg, Ca, Sr, V, Cr, Y, Mo, Nb, B, Al, W, La, Sm, Co, Ni, Cu, Zn, Zr, and Ti.

6. The preparation method according to claim 5, wherein:

an actual molar content ratio m' of element Mn to element Fe at any position in the manganese iron phosphate precursor and a theoretical molar content ratio $m_0$ of element Mn to element Fe at any position in the manganese iron phosphate precursor satisfy the following relationship: $\Delta m_p = |m'-m_0|/m_0 \leq 5\%$, and preferably, $\Delta m_p = |m'-m_0|/m_0 \leq 3\%$;
preferably, the manganese iron phosphate precursor has a median particle size ranging from 0.5 $\mu$m to 10 $\mu$m,

and preferably, from 0.5 $\mu$m to 5 $\mu$m;

preferably, primary particles of the manganese iron phosphate precursor have a size ranging from 20 nm to 200 nm, and preferably, from 20 nm to 100 nm;

preferably, the manganese iron phosphate precursor has a tap density ranging from 0.50 $g/cm^3$ to 1.50 $g/cm^3$, and preferably, from 0.80 $g/cm^3$ to 1.50 $g/cm^3$; and

preferably, the manganese iron phosphate precursor has a specific surface area ranging from 10 $m^2/g$ to 100 $m^2/g$, and preferably, from 10 $m^2/g$ to 40 $m^2/g$.

7. The preparation method according to claim 5 or 6, wherein the preparation method of the manganese iron phosphate precursor satisfies the following relationship:

$K=(0.033K_1+0.5)\cdot L^{-.03}\cdot T^{0.2}-0.05$, Formula III, where: K is a ratio of n(P) to [n(Mn)+n(Fe)+n(M)] in the manganese iron phosphate precursor, $K_1$ is a molar ratio of an addition amount of the phosphorus source based on n1(P) to a total addition amount of the manganese source, the iron source, and the R1 source based on [n1(Mn)+n1(Fe)+n1(M)], L is a pH value of the phosphorus source solution, and T is a temperature of the coprecipitation reaction;

preferably, $0.9 \leq K_1 \leq 2$, $0 < L \leq 3$, and $30°C \leq T \leq 90°C$; and

preferably, $1 \leq K_1 \leq 1.5$, $1.5 \leq L \leq 2.5$, and $60°C \leq T \leq 90°C$.

8. The preparation method according to any one of claims 5 to 7, wherein:

the R1 source and the R2 source are each independently selected from a compound capable of providing at least one element of Al, Mg, Ca, Sr, V, Cr, Y, Mo, Nb, B, Al, W, La, Sm, Co, Ni, Cu, Zn, Zr, and Ti;

preferably, the lithium source is selected from at least one of lithium hydroxide, lithium carbonate, lithium dihydrogen phosphate, lithium oxalate, lithium nitrate, and lithium acetate; and

preferably, the carbon source is selected from at least one of glucose, sucrose, fructose, cellulose, starch, citric acid, polyacrylic acid, polyethylene glycol, and dopamine.

9. The preparation method according to any one of claims 5 to 8, wherein:

in step S1, a concentration of the mixed salt solution ranges from 0.1 mol/L to 4 mol/L, and preferably, from 0.2 mol/L to 2 mol/L;

preferably, in step S2, a concentration of the phosphorus source solution ranges from 0.2 mol/L to 20 mol/L, and preferably, from 1 mol/L to 15 mol/L;

preferably, in step S3, a molar ratio of an addition amount of the phosphorus source based on n1(P) to a total addition amount of the manganese source, the iron source, and the R1 source based on [n1(Mn)+n1(Fe)+n1(R1)] is (1 to 5):1, and preferably, (1 to 3):1; and

preferably, in step S3, a molar ratio of an addition amount of the oxidant to a total addition amount of the manganese source, the iron source, and the R1 source based on [nl(Mn)+nl(Fe)+nl(R1)] is (1 to 10):1, and preferably, (1 to 5):1.

10. The preparation method according to any one of claims 5 to 9, wherein:

the coprecipitation reaction is performed under stirring;

preferably, a stirring speed ranges from 200 r/min to 800 r/min, and preferably, from 400 r/min to 800r/min;

preferably, an aging reaction is performed subsequent to the coprecipitation reaction;

preferably, conditions for the aging reaction comprise an aging temperature ranging from 30°C to 90°C and an aging duration ranging from 1 hour to 10 hours;

preferably, a washing detergent for said washing is water at a temperature ranging from 20°C to 90°C;

preferably, conditions for said drying comprise a drying temperature ranging from 50°C to 200°C and a drying duration ranging from 2 hours to 8 hours;

preferably, in step S4, said mixing is performed in the presence of a solvent to obtain a mixed slurry, and the mixed material is obtained subsequent to removing the solvent in the mixed slurry; and

preferably, in step S5, conditions for the calcining comprise a calcination temperature ranging from 500°C to 1,000°C and a calcination duration ranging from 4 hours to 20 hours.

11. A lithium manganese iron phosphate cathode material, prepared by the preparation method according to any one of claims 5 to 10.

**12.** A manganese iron phosphate precursor, wherein:

a material of the precursor has a composition represented by Formula II:

$Mn_{1-x-y}Fe_xR1_yP_zO_4 \cdot nH_2O$, Formula II, where $0.1 \leq x \leq 0.5$, $0 \leq y \leq 0.04$, $0.95 < z < 1.10$, $0.95 \leq n \leq 1.5$, and R1 is selected from at least one of Al, Mg, Ca, Sr, V, Cr, Y, Mo, Nb, B, Al, W, La, Sm, Co, Ni, Cu, Zn, Zr, and Ti;

preferably, an actual molar content ratio m' of element Mn to element Fe at any position in the manganese iron phosphate precursor and a theoretical molar content ratio $m_0$ of element Mn to element Fe at any position in the manganese iron phosphate precursor satisfy the following relationship:

$$\Delta m_p = |m'-m_0|/m_0 \leq 5\%;$$

preferably, the manganese iron phosphate precursor has a median particle size ranging from 0.5 $\mu$m to 10 $\mu$m, and preferably, from 0.5 $\mu$m to 5 $\mu$m;

preferably, primary particles of the manganese iron phosphate precursor have a size ranging from 20 nm to 200 nm, and preferably, from 20 nm to 100 nm;

preferably, the manganese iron phosphate precursor has a tap density ranging from 0.50 $g/cm^3$ to 1.50 $g/cm^3$, and preferably, from 0.80 $g/cm^3$ to 1.50 $g/cm^3$; and

preferably, the manganese iron phosphate precursor has a specific surface area ranging from 10 $m^2/g$ to 100 $m^2/g$, and preferably, from 10 $m^2/g$ to 40 $m^2/g$.

**13.** A preparation method of a manganese iron phosphate precursor, comprising:

(1) mixing a manganese source, an iron source, and an R1 source with water, to obtain a mixed salt solution;
(2) mixing a phosphorus source with water, and adding a pH adjuster, to obtain a phosphorus source solution;
(3) adding the mixed salt solution, the phosphorus source solution, and an oxidant into a reactor in parallel, performing a coprecipitation reaction, filtering, washing, and drying, to obtain the manganese iron phosphate precursor;

preferably, the preparation method of the manganese iron phosphate precursor satisfies the following relationship:

$K = (0.033K_1 + 0.5) \cdot L^{-0.3} \cdot T^{0.2} - 0.05$, Formula III, where: K is a ratio of n(P) to [n(Mn)+n(Fe)+n(R1)] in the manganese iron phosphate precursor, $K_1$ is a molar ratio of an addition amount of the phosphorus source based on n1(P) to a total addition amount of the manganese source, the iron source, and the R1 source based on [n1(Mn)+n1(Fe)+n1(R1)], L is a pH value of the phosphorus source solution, and T is a temperature of the coprecipitation reaction; and

preferably, $0.9 \leq K_1 \leq 2$, $0 < L \leq 3$, and $30°C \leq T \leq 90°C$.

**14.** A manganese iron phosphate precursor, prepared by the preparation method according to claim 13.

**15.** A lithium-ion battery, comprising:

the lithium manganese iron phosphate cathode material according to any one of claims 1 to 4 and claim 11; or
a cathode material prepared with the manganese iron phosphate precursor according to claim 12 or 14.

FIG. 1

FIG. 2

Fe Ka1

Mn Ka1

FIG. 3

— Example 1

PDF#77-0178 LiMnPO$_4$

2 Theta (degree)

FIG. 4

FIG. 5

## INTERNATIONAL SEARCH REPORT

| International application No. |
| --- |
| **PCT/CN2023/086937** |

**A.    CLASSIFICATION OF SUBJECT MATTER**

H01M4/136(2010.01)i;  H01M4/139(2010.01)n;  H01M10/0525(2010.01)n;  C01B25/45(2006.01)n;
C01B32/05(2017.01)n

According to International Patent Classification (IPC) or to both national classification and IPC

**B.    FIELDS SEARCHED**

Minimum documentation searched (classification system followed by classification symbols)

IPC：H01M，C01B

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, WPABS, WPABSC: 磷酸锰铁, 磷酸锰铁锂, 磷酸铁锂, 掺杂, 沉淀, 调, PH, 理论, 磷源, 锰, 摩尔, 实际, 铁, 氧化剂, 臭氧, 次氯酸钠, 高锰酸钾, 高铁酸钠, 过硫酸钠, 过硫酸铵, 并流, "LiMnFePO4", "MnFePO4", dop+, fact, Fe, iron, manganese, Mn, mol, mole, PH, practice, real, reality, theory, actual+, virtual+

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 113942990 A (BEIJING EASPRING MATERIAL TECHNOLOGY CO., LTD.) 18 January 2022 (2022-01-18)<br>    description, paragraphs [0007]-[0030] | 5, 8-11, 15 |
| Y | CN 114105116 A (GEM CO., LTD. et al.) 01 March 2022 (2022-03-01)<br>    description, paragraphs [0007]-[0017] | 5, 8-11, 15 |
| A | CN 103828099 A (A123 SYSTEMS, LLC) 28 May 2014 (2014-05-28)<br>    entire document | 1-15 |
| A | CN 104577119 A (HEFEI GUOXUAN HIGH-TECH POWER ENERGY CO., LTD.) 29 April 2015 (2015-04-29)<br>    entire document | 1-15 |
| A | CN 113659134 A (JIANGSU LENENGY BATTERY JOINT-STOCK CO., LTD.) 16 November 2021 (2021-11-16)<br>    entire document | 1-15 |

☑ Further documents are listed in the continuation of Box C.          ☑ See patent family annex.

| | |
| --- | --- |
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **20 November 2023** | **25 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 525 076 A1**

**INTERNATIONAL SEARCH REPORT**

| International application No. |
| --- |
| **PCT/CN2023/086937** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2017229709 A1 (A123 SYSTEMS, LLC) 10 August 2017 (2017-08-10)<br>entire document | 1-15 |

Form PCT/ISA/210 (second sheet) (July 2022)

## INTERNATIONAL SEARCH REPORT
### Information on patent family members

International application No.

**PCT/CN2023/086937**

| Patent document cited in search report | | | Publication date (day/month/year) | Patent family member(s) | | | Publication date (day/month/year) |
|---|---|---|---|---|---|---|---|
| CN | 113942990 | A | 18 January 2022 | WO | 2023024651 | A1 | 02 March 2023 |
| | | | | CN | 113942990 | B | 20 June 2023 |
| CN | 114105116 | A | 01 March 2022 | WO | 2023109161 | A1 | 22 June 2023 |
| CN | 103828099 | A | 28 May 2014 | US | 2014138591 | A1 | 22 May 2014 |
| | | | | US | 11127944 | B2 | 21 September 2021 |
| | | | | JP | 2014524133 | A | 18 September 2014 |
| | | | | JP | 6396799 | B2 | 26 September 2018 |
| | | | | WO | 2013016426 | A1 | 31 January 2013 |
| | | | | KR | 20140068893 | A | 09 June 2014 |
| | | | | KR | 101965016 | B1 | 02 April 2019 |
| | | | | EP | 2737565 | A1 | 04 June 2014 |
| | | | | EP | 2737565 | A4 | 08 April 2015 |
| | | | | EP | 2737565 | B1 | 25 September 2019 |
| | | | | CN | 103828099 | B | 20 April 2018 |
| CN | 104577119 | A | 29 April 2015 | CN | 104577119 | B | 01 February 2017 |
| CN | 113659134 | A | 16 November 2021 | None | | | |
| US | 2017229709 | A1 | 10 August 2017 | US | 2020052298 | A1 | 13 February 2020 |
| | | | | US | 11652207 | B2 | 16 May 2023 |
| | | | | US | 10522833 | B2 | 31 December 2019 |
| | | | | US | 2016380269 | A1 | 29 December 2016 |
| | | | | US | 9954228 | B2 | 24 April 2018 |
| | | | | US | 2023253561 | A1 | 10 August 2023 |
| | | | | US | 2015180022 | A1 | 25 June 2015 |
| | | | | US | 9660267 | B2 | 23 May 2017 |

Form PCT/ISA/210 (patent family annex) (July 2022)

**REFERENCES CITED IN THE DESCRIPTION**

**Patent documents cited in the description**

- CN 114057177 A
- CN 107697899 A